# EUROPÄISCHE PATENTSCHRIFT

(11) **EP 4 080 313 B1**
(45) Veröffentlichungstag und Bekanntmachung des Hinweises auf die Patenterteilung: **01.11.2023**
(21) Anmeldenummer: 22174640.7
(22) Anmeldetag: 30.04.2020
(51) Int. Cl.: G05D 1/02, B62D 1/00, B62D 1/28, B62D 65/18

(54) **BEHANDLUNGSANLAGE ZUM BEHANDELN VON WERKSTÜCKEN**
TREATMENT SYSTEM FOR TREATING WORKPIECES
INSTALLATION DE TRAITEMENT POUR LE TRAITEMENT DES PIÈCES

(30) Priorität: 25.06.2019 DE 102019117036
(43) Veröffentlichungstag der Anmeldung: 26.10.2022
(62) Teilanmeldung aus: 20723838.7
(73) Patentinhaber: Eisenmann GmbH, 71032 Böblingen (DE)
(72) Erfinder: Schulze, Herbert, 71134 Aidlingen (DE)
(74) Vertreter: Ostertag & Partner Patentanwälte mbB

(56) Entgegenhaltungen:
- US-A1- 2019 135 549

## Beschreibung

### 1. Gebiet der Erfindung

Die Erfindung betrifft eine Behandlungsanlage zum Behandeln von Werkstücken, insbesondere zum Behandeln von Fahrzeugkarosserien, mit
a) einem Fördersystem, das mehrere freifahrende Transportwagen umfasst, mit denenjeweils zumindest ein Werkstück entlang einer Förderstrecke in variierbaren Förderrichtungen förderbar ist;
wobei
b) jeder freifahrende Transportwagen jeweils umfasst:
   ba) ein Fahrwerk, das eine Hauptachse und Hauptausrichtung des freifahrenden Transportwagens definiert, eine Befestigungseinrichtung für zumindest ein Werkstück und eine Verbindungseinrichtung, die das Fahrwerk mit der Befestigungseinrichtung (48) koppelt; und
   bb) eine Steuereinrichtung, die dazu eingerichtet ist, in Abhängigkeit von Positionsinformationen, die von zumindest einem Positionsinformationsgeber bereitgestellt werden, das Fahrwerk entlang der Förderstrecke zu steuern;
c) entlang der Förderstrecke ein Fahrraum vorhanden ist, der über einen Verbindungsdurchgang mit einem Werkstück-Förderraum verbunden ist, wobei das Fahrwerk in dem Fahrraum bewegbar ist, so dass die Befestigungseinrichtung in dem Werkstück-Förderraum mitgeführt wird und sich die Verbindungseinrichtung durch den Verbindungsdurchgang hindurch erstreckt.

### 2. Beschreibung des Standes der Technik

Bei Behandlungsanlagen der eingangs genannten Art sind entlang der Förderstrecke eine oder mehrere Behandlungseinrichtungen angeordnet, bei denen es sich insbesondere um eine Beschichtungskabine, einen Trockner oder eine Arbeitsstation handeln kann. Hierbei können die Werkstücke in einer Behandlungseinrichtung mit Materialien oder Medien behandelt, beispielsweise lackiert, werden, oder in einer Arbeitsstation montiert oder auch mechanisch bearbeitet, beispielsweise geschliffen oder poliert, werden. Bei Fahrzeugkarosserien kann eine Arbeitsstation insbesondere durch eine Montagestation gebildet sein, in welcher die Rohkarosserie mit den Fahrzeugkomponenten ausgestattet wird.

In dem Förderraum kann bei der Behandlung der Werkstücke eine für die Fördertechnik schädliche Atmosphäre entstehen. Da der Fahrraum für die Fördertechnik und der Förderraum für die Werkstücke nur durch den Verbindungsdurchgang miteinander verbunden sind, kann insbesondere in Verbindung mit geeigneten Abschirmmitteln an dem Verbindungsdurchgang ein Atmosphärenübergang zwischen den Räumen verringert werden, so dass die Fördertechnik im Fahrraum nicht übermäßig durch schädliche Atmosphäre belastet wird.

Transportsysteme mit freifahrenden Transportwagen sind dem Fachmann auch unter dem Begriff "fahrerloses Transportsystem" oder FTS geläufig. Freifahrende Transportwagen sind bodengebunden, d.h. ihr Fahrwerk läuft auf einem Fahrboden ab, und sie sind voneinander unabhängig antreibbar und lenkbar. Ein zugehöriger Positionsinformationsgeber kann ein bekanntes Wegfindungssystem sein. Dieser kann beispielsweise am oder im Fahrboden angebrachte Wegmarkierungen, ein anlageninternes GPS und/oder matrixbasierte Positionsinformationsgeber umfassen. Möglich sind zusätzlich oder alternativ auch optische Fernfeld-Sensoren, mit denen eine Kollision mit auf der Förderstrecke befindlichen Hindernissen verhindert werden kann. Die grundsätzlichen Steuerbefehle, wie Fahraufträge, Zielort etc. werden dabei in der Regel durch eine übergeordnete Zentralsteuerung koordiniert.

Insbesondere in der Fahrzeugproduktion ist ein bestehender Wunsch, von der Beschichtung der Fahrzeugkarosserien bis hin zur Endmontage der Fahrzeuge ein FTS zu verwenden. Dadurch kann auf einen Wechsel des Transportmittels verzichtet werden, was Kosten einspart und die Effizienz steigert.

Wenn die Förderrichtung eines Transportwagens variiert, ändert sich ein, allgemein ausgedrückt, nach vorne weisender Richtungsvektor. In Kurvenabschnitten der Förderstrecke beschreibt die Förderrichtung an einer Position des Transportwagens im Kurvenverlauf stets einen senkrecht zum Radius der Kurvenkrümmung verlaufenden Tangentialvektor.

Die Hauptachse und Hauptausrichtung des freifahrenden Transportwagens orientiert sich jeweils an der Vorwärtsbewegung der Transportwagen bezogen auf eine festgelegte Front des Transportwagens. Dies bedeutet, auch bei kubischen und/oder omnidirektional bewegbaren freifahrenden Transportwagen weisen die Hauptachse und die Hauptausrichtung stets in Richtung dieser festgelegten Fahrzeugfront und der daraus resultierenden Vorwärtsbewegung.

Behandlungsanlagen, bei denen Fördersysteme mit freifahrenden Transportwagen eingesetzt werden, haben den Vorteil, dass sie maximal flexibel an verschiedene Werkstücke, geänderte Produktionsabläufe und dergleichen angepasst werden können. Es ist außerdem nicht erforderlich, ein die gesamte Behandlungsanlage umspannendes Netz aus Schienen, Elektrobahnen oder dergleichen zu installieren, da die freifahrenden Transportwagen direkt auf dem Anlagenboden abrollen können.

Zur Navigation und Koordination der einzelnen freifahrenden Transportwagen werden häufig Wegmarkierungen auf dem Anlagenboden angebracht, die zusätzlich beispielsweise Sondermarkierungen für einzelne abzufahrende Routen der freifahrenden Transportwagen aufweisen können. Zur Detektion dieser Wegmarkierungen und zur Detektion von Hindernissen entlang oder auf der Förderstrecke weisen die freifahrenden Transportwagen üblicherweise eine individuelle Fernfeld-Sensoranordnung auf. Diese umfasst einerseits Wegmarkierungssensoren für die Wegmarkierungen und anderseits Hindernissensoren, mit welchen auch Hindernisse in größerer Entfernung zu dem Transportwagen noch detektiert werden können. Nachteilig an dieser Fernfeld-Sensoranordnung ist aber, dass diese auf engem Raum, insbesondere in dem gesonderten Fahrraum für den freifahrenden Transportwagen, nur unzureichend arbeitet. So kann es geschehen, dass die Fernfeld-Sensoranordnung bei einer Fahrraumbegrenzung bei Einfahren in einen Fahrraum ähnliche Signale generiert, wie in Fällen, in denen ein Hindernis entlang oder auf der Förderstrecke positioniert wäre. Dies kann im ungünstigsten Fall dazu führen, dass eine Steuereinrichtung dies als Hindernis interpretiert und eine Haltanweisung erzeugt. Dadurch kommt es zu einem kurzzeitigen Produktionsstillstand.

Bei freifahrenden Transportwagen der eingangs genannten Art kann es darüber hinaus zu ungünstigen Kollisionen der Verbindungseinrichtung mit dem Verbindungsdurchgang kommen. Dabei ist eine solche Kollisionsgefahr vor allem in Kurvenabschnitten der Förderstrecke erhöht. Bei einem Kontakt der Verbindungseinrichtung und dem Verbindungsdurchgang kann es im ungünstigsten Fall zu einem Verkanten des Systems und einer Havarie des Transportwagens kommen. Dadurch sinkt zum einen die Effizienz der Behandlungsanlage, da die Transportwagen in den Kurvenabschnitten durch die auftretende Kollisionen nicht mehr reibungslos fahren können. Zum anderen steigt der Verschleiß sowohl am Verbindungsdurchgang als auch an der Verbindungseinrichtung, was kostenintensive Wartungsarbeiten nach sich ziehen kann.

US2019135549 beschreibt eine Variante der Vorrichtung, die auf diesem technischen Gebiet verwendet wird.

### ZUSAMMENFASSUNG DER ERFINDUNG

Aufgabe der Erfindung ist es daher, eine Behandlungsanlage anzugeben, die den vorstehend erläuterten Nachteilen aus dem Stand der Technik begegnet.

Die Aufgabe wird bei einer Behandlungsanlage der eingangs genannten Art dadurch gelöst, dass
d) die Behandlungsanlage zusätzlich zur Steuereinrichtung des freifahrenden Transportwagens eine mechanische und/oder sensorabhängige Spurunterstützungseinrichtung aufweist, die dazu eingerichtet ist, die Hauptausrichtung des freifahrenden Transportwagens und die Förderrichtung anhand von wenigstens einem von dem Verbindungsdurchgang abhängigen Parameter aktiv und/oder passiv aufeinander abzustimmen.

Erfindungsgemäß wurde erkannt, dass mit Hilfe einer solchen Spurunterstützungseinrichtung die sich durch den Verbindungsdurchgang der Behandlungsanlage erstreckenden Verbindungseinrichtungen sicherer, d.h. weitgehend kollisionsfrei, entlang der Förderstrecke durch den Verbindungsdurchgang hindurchgeführt werden können. Durch die zusätzlich vorhandene Spurunterstützungseinrichtung ist es ferner möglich, die Förderstrecke in der Behandlungsanlage besonders flexibel und den Bedürfnissen entsprechend zu konfigurieren. Somit sind Streckenverläufe möglich, die aufgrund der mangelnden Abstimmung der Förderrichtung und der Hauptausrichtung des freifahrenden Transportwagens bisher nicht möglich waren. So ist zum Beispiel ein kurvenartiger Streckenverlauf durch eine Behandlungseinrichtung möglich, wobei die Werkstücke dann ebenfalls in Kurvenbereichen behandelt werden können. Darüber hinaus kann der Verbindungsdurchgang durch die Erfindung besonders schmal gehalten werden, wodurch der Fahrraum beispielsweise effizienter von schädigender Atmosphäre aus dem Werkstück-Förderraum abgeschirmt werden kann.

Bei der Spurunterstützungseinrichtung ist es besonders von Vorteil, wenn der von dem Verbindungsdurchgang abhängige Parameter zumindest mittelbar
a) der Verlauf einer Kante und/oder einer Innenfläche des Verbindungsdurchgangs in Förderrichtung ist; und/oder
b) die Neigung einer Innenfläche des Verbindungsdurchgangs zu einer in Förderrichtung verlaufenden vertikalen Ebene ist; und/oder
c) die lokale Breite des Verbindungsdurchgangs ist.

Unter der lokalen Breite wird der Abstand von einer Kante oder Innenfläche zu einer in der Regel senkrecht zur Förderrichtung gegenüberliegenden Kante oder Innenfläche des Verbindungsdurchgangs verstanden. Vorzugsweise ist die Breite des Verbindungsdurchgangs entlang der Förderstrecke konstant.

Vorzugsweise können die Hauptausrichtung der freifahrenden Transportwagen und die Förderrichtung durch die Spurunterstützungseinrichtung derart aufeinander abstimmbar sein, dass
a) die Hauptausrichtung nach oder während einer Abstimmung des freifahrenden Transportwagens stets parallel oder senkrecht zur Förderrichtung verläuft bzw. gehalten wird; und/oder
b) zumindest ein Abschnitt der Verbindungseinrichtung, der sich durch den Verbindungsdurchgang hindurch erstreckt, nach oder während der Abstimmung in einem vorgegebenen Toleranzabstand von zumindest einer Kante und/oder einer Innenfläche des Verbindungsdurchgangs vorliegt bzw. gehalten ist.

Möglich ist es dadurch insgesamt, den Abschnitt der Verbindungseinrichtung zu einer oder zu beiden Kanten und/oder Innenflächen des Verbindungsdurchgangs in jeweils einem vorgegebenen Toleranzabstand zu halten. Der Abschnitt der Verbindungseinrichtung, der sich durch den Verbindungsdurchgang hindurch erstreckt, kann beispielsweise eine Stange oder Strebe oder ähnliches sein.

Vorzugsweise beträgt dieser Toleranzabstand wenigstens 3 bis 7 mm, vorzugsweise wenigstens 6 bis 9 mm und besonders vorzugsweise wenigstens 8 bis 14 mm.

Bei einer besonders bevorzugten Ausgestaltung kann eine Mitte einer maximalen Querausdehnung des Abschnittes der Verbindungseinrichtung auf einer Mittellinie des Verbindungsdurchgangs gehalten werden. Unter der Mittellinie des Verbindungsdurchgangs wird eine hypothetische Linie im Verbindungsdurchgang und in Förderrichtung verstanden, die zu beiden Kanten und/oder Innenflächen des Verbindungsdurchgangs stets den gleichen Abstand hat.

Günstig ist es bei der Behandlungsanlage ferner, wenn
a) die Spurunterstützungseinrichtung zum aktiven Abstimmen der Hauptausrichtung und der Förderrichtung aufeinander zumindest eine Nahfeld-Sensoranordnung aufweist, die mit einer Spursteuereinheit gekoppelt ist,
wobei
b) die Spursteuereinheit über von der Nahfeld-Sensoranordnung ermittelbare Lage-Rohinformationen eine relative Lage eines oder mehrerer Punkte der freifahrenden Transportwagen hinsichtlich eines oder mehrerer von dem Verbindungsdurchgang abhängiger Parameter jeweils zumindest indirekt bestimmen kann.

Die Lage-Rohinformationen sind von der Spursteuereinheit zu Lageinformationen prozessierbar.

Unter einer aktiven Abstimmung wird in diesem Sinne verstanden, dass zumindest ein Antrieb vorhanden ist, um die Hauptausrichtung des freifahrenden Transportwagens und die Förderrichtung aufeinander abzustimmen.

Die Lageinformationen, die mittels der Lage-Rohinformationen ermittelbar sind, umfassen dabei vorzugsweise zumindest eine Information der folgenden Gruppe: Position von zumindest einer Kante und/oder Innenfläche des Verbindungsdurchgangs, Position einer Mittellinie des Verbindungsdurchgangs, Abstand der Verbindungseinrichtung zu zumindest einer Kante und/oder Innenfläche des Verbindungsdurchgangs. Ebenso kann es für aussagekräftige Lageinformationen notwendig sein, in die Ermittlung festgelegte Sollwerte oder weitere Messinformationen miteinzubeziehen.

Vorzugsweise werden die Lageinformationen mit Sollwerten verglichen, um in Abhängigkeit von dem Vergleichsergebnis eine Abstimmung der Hauptausrichtung auf die variierbare Förderrichtung vornehmen zu können. Diese Sollwerte können beispielsweise zumindest eine Information der folgenden Gruppe sein: Soll-Verlauf einer Kante und/oder Innenfläche des Verbindungsdurchgangs, Soll-Verlauf einer Mittellinie des Verbindungsdurchgangs, Toleranzabstand der Verbindungseinrichtung zu zumindest einer Kante und/oder Innenfläche des Verbindungsdurchgangs.

Erfindungsgemäß wurde erkannt, dass der freifahrende Transportwagen mit Hilfe einer solchen Nahfeld-Sensoranordnung einfacher entlang einer Förderstrecke verfahren werden kann, entlang welcher Hindernisse oder Objekte, die von der Steuereinrichtung als Hindernisse interpretiert werden könnten, vorhanden sind. Ebenso ist es wegen der zusätzlich vorhandenen Nahfeld-Sensoranordnung möglich, die Förderstrecke besonders flexibel und den Bedürfnissen entsprechend zu konfigurieren, beispielsweise kann die Förderstrecke einen oder mehrere Kurvenabschnitte aufweisen.

Vorzugsweise ist die Nahfeld-Sensoranordnung an dem freifahrenden Transportwagen angeordnet.

Damit der freifahrende Transportwagen besonders flexibel auf die variierbaren Förderrichtungen abgestimmt werden kann, ist es günstig, wenn die Spursteuereinheit am oder im freifahrenden Transportwagen angeordnet ist. Insbesondere dann, wenn mehrere freifahrende Transportwagen der gleichen Art vorhanden sind, kann es besonders vorteilhaft sein, wenn jeder jeweils unabhängig von den anderen freifahrenden Transportwagen auf die variierbaren Förderrichtungen abgestimmt werden kann. Besonders vorteilhaft hieran ist, dass keine übergeordnete Spursteuereinheit vonnöten ist, die alle freifahrenden Transportwagen koordiniert. Hierdurch können die Hauptausrichtungen der freifahrenden Transportwagen und die jeweilige Förderrichtung besonders flexibel und individuell anhand einer oder mehrerer Lageinformationsquellen der Nahfeld-Fahrumgebung aufeinander abgestimmt werden.

Besonders günstig ist es, wenn die Nahfeld-Sensoranordnung zumindest eine Kamera oder einen optischen Scanner, insbesondere einen Laserscanner, und/oder zumindest einen Ultraschall-Sensor und/oder zumindest einen Radar-Sensor umfasst, die bzw. der am freifahrenden Transportwagen angeordnet ist und mittels eines Kamerabildes und/oder optisch scanbarer Strukturen und/oder reflektierender Strukturen Lage-Rohinformationen ermitteln kann, die von der Spursteuereinheit zu Lageinformationen prozessierbar sind. Lage-Rohinformationen können dann beispielsweise einen Helligkeitswert oder Kontrastwert umfassen. Sie können zusätzlich oder alternativ ein Kantenbild, beispielsweise des Verlaufs des Verbindungsdurchgangs, ein Reflexions-, Absorptions-, und/oder Polarisationsspektrum, und/oder komplexere Markierungsinformationen, beispielsweise Informationen eines Barcodes oder dergleichen, enthalten.

Zusätzlich oder alternativ kann es vorteilhaft sein, wenn die Nahfeld-Sensoranordnung zumindest einen an der Verbindungseinrichtung oder an einem Fahrwerkgehäuse angeordneten Kraftsensor umfasst, der dazu eingerichtet ist, ein Anstoßen der Verbindungseinrichtung an eine Kante oder eine Innenfläche des Verbindungsdurchgangs und/oder eine Fahrraumbegrenzung des Fahrraums zu detektieren. Die Lage-Rohinformation kann dann eine von dem Kraftsensor gemessene Kraft sein. Beispielsweise kann der Kraftsensor als Dehnungsmessstreifen oder Messtaster oder dergleichen ausgebildet sein.

Außerdem kann es von Vorteil sein, wenn die Nahfeld-Sensoranordnung zusätzlich oder alternativ einen Drehwertgeber umfasst, der dazu eingerichtet ist, eine Drehstellung zumindest einer Radanordnung des freifahrenden Transportwagens anzugeben. Die Lage-Rohinformation kann dann ein vom Drehwertgeber bereitgestellter Winkel oder dergleichen sein.

Vorteilhafterweise weist das Fahrwerk jeweils ein oder mehrere aktiv drehbare Radanordnungen auf, die
a) jeweils um eine Drehachse aktiv drehbar sind, die zu einer Radaufhängungsachse senkrecht, insbesondere vertikal, verläuft, und
b) über einen Drehantrieb mit der Spursteuereinheit gekoppelt sind, derart, dass die Spursteuereinheit in Abhängigkeit von den von der zumindest einen Nahfeld-Sensoranordnung ermittelbaren Lage-Rohinformationen einen oder mehrere Drehantriebe aktiviert, derart, dass der jeweils aktivierte Drehantrieb eine Drehung der entsprechenden Radanordnung um die Drehachse bewirkt.

Dies bedeutet, bei dieser vorteilhaften Variante empfängt die Spursteuereinheit von der Nahfeld-Sensoranordnung Lage-Rohinformationen, anhand derer der oder die Drehantriebe für die eine oder die mehreren Radanordnungen angesteuert werden können.

Somit ist es beispielsweise möglich, mittels eines vom Drehwertgeber ermittelbaren Drehwertes, beispielsweise eines Winkels, für die jeweilige Radanordnung die Drehstellung der Radanordnung auf eine Soll-Drehstellung an einem bestimmten Punkt entlang der Förderstrecke abzustimmen und somit in Summe einem vorgegebenen Streckenverlauf zu folgen.

Dafür ist es besonders günstig, wenn eine, mehrere oder alle aktiv drehbaren Radanordnungen mittels der Spursteuereinheit individuell drehbar sind. Hierdurch ist es möglich, die Radaufhängungsachsen der Radanordnungen in einem Kurvenabschnitt der Förderstrecke jeweils individuell auf einen Krümmungsmittelpunkt des Kurvenabschnittes zu richten.

Zum passiven Abstimmen der Hauptausrichtung und der Förderrichtung aufeinander entlang der Förderstrecke sieht die Spurunterstützungseinrichtung vorzugsweise eine oder mehrere mechanische Führungsstrukturen vor, die auf die freifahrenden Transportwagen jeweils einen Führungswiderstand ausüben können.

Unter einer passiven Abstimmung wird in diesem Sinne verstanden, dass nicht zwingend ein gesonderter Antrieb erforderlich ist, um die Hauptausrichtung des freifahrenden Transportwagens und die variierbare Förderrichtung aufeinander abzustimmen.

Führungsstrukturen können idealerweise durch
a) eine oder mehrere Fahrwerk-Führungsstrukturen ausgebildet sein, die innerhalb des Fahrraumes, insbesondere auf einem Fahrboden innerhalb des Fahrraumes, angeordnet sind, und die den Führungswiderstand auf das Fahrwerk ausüben können, wobei die Drehachse zu einer Radaufhängungsachse senkrecht, insbesondere vertikal, verläuft; und/oder
b) durch eine Fahrraumbegrenzung ausgebildet sein, die den Führungswiderstand auf ein Fahrwerkgehäuse des Fahrwerks ausüben kann.

Diese Fahrwerk-Führungsstrukturen können beispielsweise über abgestimmt auf den Verlauf des Verbindungsdurchgangs verlaufende Führungsbleche ausgebildet sein. Möglich ist es aber auch, entsprechende Rillen oder ähnliche Vertiefungen im Fahrboden vorzusehen, in welchen das Fahrwerk abläuft.

Um etwaige Kollisionen der Verbindungseinrichtung mit dem Verbindungsdurchgang zusätzlich zu vermeiden, kann es von Vorteil sein, wenn an der Verbindungseinrichtung ein Kontaktelement, insbesondere ein Roll- oder Gleitelement, angeordnet ist, welches an zumindest einer Kante und/oder einer Innenfläche des Verbindungsdurchgangs entlangrollen bzw. entlanggleiten kann.

Vorzugsweise kann der bereits zum freifahrenden Transportwagen erwähnte Kraftsensor in einer Variante in oder an dem Roll- oder Gleitelement angeordnet sein. Dieser Kraftsensor kann, wie bereits oben erwähnt, beispielsweise auch als Messtaster ausgebildet sein. Insbesondere denkbar ist eine Ausführung, in welcher der Messtaster jeweils den Verbindungseinrichtungen in Bewegungsrichtung der freifahrenden Transportwagen vorauseilt. Der Messtaster erfasst dann zumindest streckenweise Abweichungen von einem der oben genannten Sollwerte, indem er Berührungen registriert.

Ein als Dehnungsmessstreifen ausgebildeter Kraftsensor kann zusätzlich oder alternativ beispielsweise auch derart an der Verbindungseinrichtung angeordnet sein, dass er minimale reversible Auslenkungen derselben bei Entlanggleiten, Entlangrollen oder Anstoßen an dem Verbindungsdurchgang registriert.

Um die Effizienz der Behandlungsanlage in besonders günstiger Weise zu steigern, ist es von Vorteil, wenn aktive und passive Anteile der Abstimmung der Hauptausrichtung des Transportwagens und der Förderrichtung aufeinander überlagerbar sind. In anderen Worten bedeutet dies, dass sowohl mechanische Elemente der Spurunterstützungseinrichtung als auch sensorabhängige Elemente der Spurunterstützungseinrichtung vorhanden sind, und dass die Abstimmungen aufeinanderfolgend oder gleichzeitig erfolgen können.

Nach einem weiteren Aspekt der Erfindung wird die Aufgabe dadurch gelöst, dass die Behandlungsanlage mit einigen oder allen oben genannten Merkmalen Teil einer Fertigungsanlage für Werkstücke, insbesondere für Fahrzeugkarosserien, ist.

Gemäß einem weiteren Aspekt der Erfindung wird die obengenannte Aufgabe auch durch ein von einer Spursteuereinheit ausgeführtes Verfahren gelöst, das neben einem von einer Steuereinrichtung eines freifahrenden Transportwagens ausgeführten Verfahren ausgeführt wird, wobei das Verfahren die folgenden Schritte umfasst:
a) Empfangen von Lage-Rohinformationen, die von einer Nahfeld-Sensoranordnung bereitgestellt werden, die insbesondere an dem freifahrenden Transportwagen angeordnet ist;
b) Prozessieren der Lage-Rohinformationen zu Lageinformationen, mit denen eine relative Lage eines oder mehrerer Punkte des freifahrenden Transportwagens anhand eines oder mehrerer von einer Fahrumgebung, insbesondere eines Verbindungsdurchgangs und/oder eines Fahrraums der Behandlungsanlage, abhängiger Parameter bestimmt wird;
c) Erzeugen einer Positionskorrekturanweisung in Abhängigkeit der bestimmten Lageinformationen, wobei die Positionskorrekturanweisung ein Abstimmen, insbesondere ein Anpassen, einer von einem Fahrwerk des freifahrenden Transportwagens definierten Hauptausrichtung und der variierbaren Förderrichtung bewirkt.

Es ist von Vorteil, wenn der Spursteuereinheit von der Nahfeld-Sensoranordnung Lage-Rohinformation von
a) zumindest einer Kamera oder zumindest einem optischen Scanner, insbesondere einem Laserscanner, bereitgestellt werden, die bzw. der am freifahrenden Transportwagen angeordnet ist und die Lage-Rohinformationen von oberhalb des Verbindungsdurchgangs und/oder von unterhalb des Verbindungsdurchgangs mittels eines Kamerabildes bzw. optisch scanbarer Strukturen ermittelt; und/oder
b) zumindest einem Kraftsensor bereitgestellt werden, der an einer Verbindungseinrichtung oder an einem Fahrwerkgehäuse des freifahrenden Transportwagens angeordnet ist und ein Anstoßen der Verbindungseinrichtung an eine Kante oder eine Innenfläche des Verbindungsdurchgangs und/oder eine Fahrraumbegrenzung des Fahrraums detektiert.

Vorzugsweise wird durch die Positionskorrekturanweisung zumindest ein Drehantrieb, der mit einer aktiv drehbaren Radanordnung über eine zu einer Radaufhängungsachse der Radanordnung senkrecht, insbesondere vertikal, verlaufende Drehachse verbunden ist, derart aktiviert, dass der Drehantrieb eine Drehung der entsprechenden Radanordnung um die Drehachse bewirkt. Bei einem freifahrenden Transportwagen, der zumindest zwei aktiv antreibbare Radanordnungen aufweist, kann eine Positionskorrekturanweisung vorzugsweise zusätzlich oder alternativ auch bewirken, dass die Radanordnungen zueinander gegenläufig angetrieben werden, wodurch eine Abstimmung der Hauptausrichtung auf die variierbare Förderrichtung erfolgt.

Günstig ist es, wenn durch die Positionskorrekturanweisung der zumindest eine Drehantrieb derart aktiviert wird, dass die Radaufhängungsachse in einem Kurvenabschnitt der Förderstrecke auf einen Krümmungsmittelpunkt des Kurvenabschnittes gerichtet bleibt. Dies bedeutet, dass in der Förderbewegung des freifahrenden Transportwagens eine kontinuierliche Abstimmung der Hauptausrichtung auf die sich verändernden Tangentialvektoren der variierbaren Förderrichtung erfolgt. Somit können besonders flüssige Kurvenfahrten des freifahrenden Transportwagens auf besonders engem Raum gewährleistet werden.

Die durchgeführten Positionskorrekturanweisungen können in einem Korrekturprotokoll abgespeichert werden, welches an die oben genannte Zentralsteuerung übergeben werden kann, die für den abgefahrenen Abschnitt eine korrigierte Basis-Bewegungsbahn für folgende Transportwagen berechnen und diese entsprechend an folgende Transportwagen übermitteln kann. Gegebenenfalls können solche Korrekturprotokolle auch zwischen zwei oder mehreren Transportwagen ausgetauscht werden, so dass eine korrigierte Basis-Bewegungsbahn von der mitgeführten Steuerung eines Transportwagens berechnet werden kann. Auch die korrigierte Basis-Bewegungsbahn wird dann gegebenenfalls wieder durch Positionskorrekturanweisungen abgewandelt, wenn dies erforderlich ist.

In Abschnitten der Förderstrecke, in denen keine Unterteilung zwischen Fahrraum für das Fahrwerk und Werkstück-Förderraum erfolgt, steuert üblicherweise die Steuereinrichtung den freifahrenden Transportwagen. Dadurch kann es in Abschnitten der Förderstrecke, die sich durch einen verengten Fahrraum und einen Verbindungsdurchgang vom Fahrraum zum Werkstück-Förderraum auszeichnen, vorkommen, dass die Steuereinrichtung und die Spursteuereinheit miteinander um die Anweisungshoheit konkurrieren. Es ist besonders von Vorteil, wenn die Spursteuereinheit anhand eines oder mehrerer festgelegter Entscheidungsparameter Steueranweisungen der Steuereinrichtung für das Fahrwerk des freifahrenden Transportwagens ganz oder teilweise blockiert. Auf diese Weise werden potentielle Produktionsstillstände vermieden, die zum Beispiel dadurch entstehen können, dass die Steuereinrichtung den Transportwagen aufgrund der erkannten Verengung stoppt und der Transportwagen liegen bleibt.

Ein solcher Entscheidungsparameter kann dabei beispielsweise anhand eines festgelegten Helligkeitswerts oder Kontrastwertes, einer gewissen Position einer Kante in einem Kantenbild, eines festgelegtes Reflexions-, Absorptions- oder Polarisationsspektrums, und/oder eines festgelegten Wertes des Kraftsensors berechnet werden. Der oder die Entscheidungsparameter zum Blockieren der Steuereinrichtung können dabei identisch mit den bereits früher erläuterten Lageinformationen sein, in Abhängigkeit welcher eine Positionskorrekturanweisung erfolgt.

### KURZE BESCHREIBUNG DER ZEICHNUNGEN

Nachfolgend werden Ausführungsbeispiele der Erfindung anhand der Zeichnungen näher erläutert. In diesen zeigen:
- Figuren 1a und 1b: einen Querschnitt und einen Teil-Längsschnitt einer aus dem Stand der Technik bekannten Behandlungsanlage zum Behandeln von Werkstücken, mit einem Werkstück-Förderraum, der durch einen Verbindungsdurchgang mit einem darunter angeordneten Fahrraum für ein Fördersystem verbunden ist, mit dem Werkstücke entlang einer Förderstrecke in variierbaren Förderrichtungen gefördert werden, wobei das Fördersystem mehrere freifahrende Transportwagen umfasst;
- Figuren 2a und 2b: jeweils einen vergrößerten Ausschnitt eines der Figur 1a entsprechenden Querschnitts und eines der Figur 1b entsprechenden Längsschnitts einer Behandlungsanlage mit einem ersten Ausführungsbeispiel einer erfindungsgemäßen Spurunterstützungseinrichtung;
- Figuren 3a und 3b: jeweils den Figuren 2a und 2b entsprechende Schnitte einer Behandlungsanlage mit einem zweiten Ausführungsbeispiel einer erfindungsgemäßen Spurunterstützungseinrichtung;
- Figuren 4a bis 4c: Ansichten von unten auf das jeweilige Fahrwerk von verschiedenen freifahrenden Transportwagen, wobei jeweils vier Radanordnungen gezeigt sind, die aktiv drehbar oder passiv drehbar sein können sowie jeweils ein oder zwei Räder aufweisen;
- Figuren 5a bis 5e: Ansichten des freifahrenden Transportwagens gemäß Figur 4c von oben, wobei dieser in mehreren Phasen des Abfahrens eines Kurvenabschnittes einer Förderstrecke dargestellt ist und wobei eine Hauptausrichtung des Transportwagens und die Förderrichtung in allen dargestellten Phasen aufeinander abgestimmt sind;
- Figuren 6a bis 6d: Ansichten eines freifahrenden Transportwagens entsprechend den Figuren 5a bis 5d, wobei sich bei dem Transportwagen zwei vertikale Streben einer Verbindungseinrichtung durch den Verbindungsdurchgang erstrecken;
- Figur 7: eine Detailansicht des freifahrenden Transportwagens in dem Kurvenabschnitt entsprechend Figur 6b, wobei unterschiedliche Förderrichtungen und Toleranzabstände zu Kanten und/oder Innenflächen des Verbindungsdurchgangs dargestellt sind;
- Figur 8: eine Vergrößerung des Bereichs VIII aus Figur 7, wobei ein Soll-Verlauf einer Kante und/oder Innenfläche des Verbindungsdurchgangs durch eine gestrichelte Linie dargestellt ist.
- Figur 9: eine schematische Darstellung eines von einer Spursteuereinheit ausgeführten Verfahrens in einem Ablaufdiagramm.

### BESCHREIBUNG BEVORZUGTER AUSFÜHRUNGSBEISPIELE

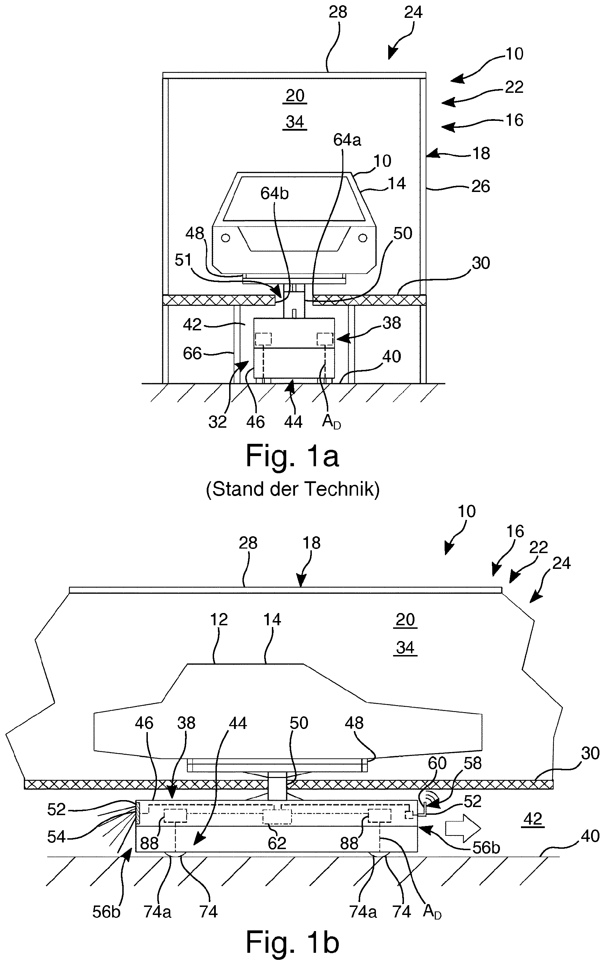

Die Figuren 1a und 1b illustrieren schematisch eine insgesamt mit 10 bezeichnete Behandlungsanlage zum Behandeln von Werkstücken 12, wie sie an und für sich bekannt ist und, sofern keine Unterschiede erläutert werden, auch vorliegend eingesetzt wird. Die Werkstücke 12 sind beispielhaft als Fahrzeugkarosserien 14 veranschaulicht.

Die Behandlungsanlage 10 umfasst eine Behandlungseinrichtung 16 mit einem Gehäuse 18, welches einen Behandlungsraum 20 definiert. In der Behandlungseinrichtung 16 kann beispielsweise ein Trocknungs-, Vorbehandlungs- oder Beschichtungsschritt, beispielsweise ein Lackierschritt, für die Werkstücke 12 ausgeführt werden. Die Behandlungseinrichtung 16 kann aber ebenfalls eine Arbeitseinrichtung 22 sein, in welcher Montageschritte und/oder eine Qualitätskontrolle, beispielsweise zur Kontrolle der Beschichtungsqualität, oder dergleichen, ausgeführt werden kann.

Im Folgenden wird die Erfindung am Beispiel einer Behandlungseinrichtung 16 erläutert, bei welcher der Behandlungsraum 20 als Behandlungstunnel 24 ausgebildet ist und zwei Tunnelwände in Form von Seitenwänden 26 sowie zwei weitere Tunnelwände in Form einer Decke 28 und eines Bodens 30 umfasst. Die Behandlungseinrichtung 16 kann alternativ auch nach oben offen sein und keine Seitenwände 26 und Decke 28 aufweisen. Unabhängig von seiner konkreten Ausbildung, d.h. ob offen oder geschlossen, hat der Behandlungsraum 20 aber in jedem Fall einen Boden 30.

Die Werkstücke 12 werden mit einem Fördersystem 32 entlang einer Förderstrecke S_{F} in variierbaren Förderrichtungen R_{F} gefördert. Im vorliegenden Ausführungsbeispiel werden die Werkstücke 12 durch den Behandlungsraum 20, d.h. hier durch den Behandlungstunnel 24 der Behandlungseinrichtung 16 hindurch, und auch außerhalb der Behandlungseinrichtung 16 gefördert. In letzterem Fall zum Beispiel zwischen zwei Behandlungseinrichtungen 16, die entlang der Förderstrecke S_{F} vorhanden sind, oder auf dem Weg zu einer Behandlungseinrichtung 16 hin oder auf dem Weg von einer Behandlungseinrichtung 16 weg, beispielsweise auch zu einem Lagerbereich der Behandlungsanlage 10.

Entlang der Förderstrecke S_{F} bewegen sich die Werkstücke 12 in einem Werkstück-Förderraum 34 oberhalb des Bodens 30, der sich entlang der Förderstrecke S_{F} erstreckt. Der Boden 30 kann auch vor und/oder hinter jeweils vorhandenen Behandlungseinrichtungen 16 vorhanden sein. Im Bereich der Behandlungseinrichtung 16 fällt der Werkstück-Förderraum 34 mit deren Behandlungsraum 20 zusammen. Der Werkstück-Förderraum 34 kann demzufolge ebenfalls offen oder geschlossen sein.

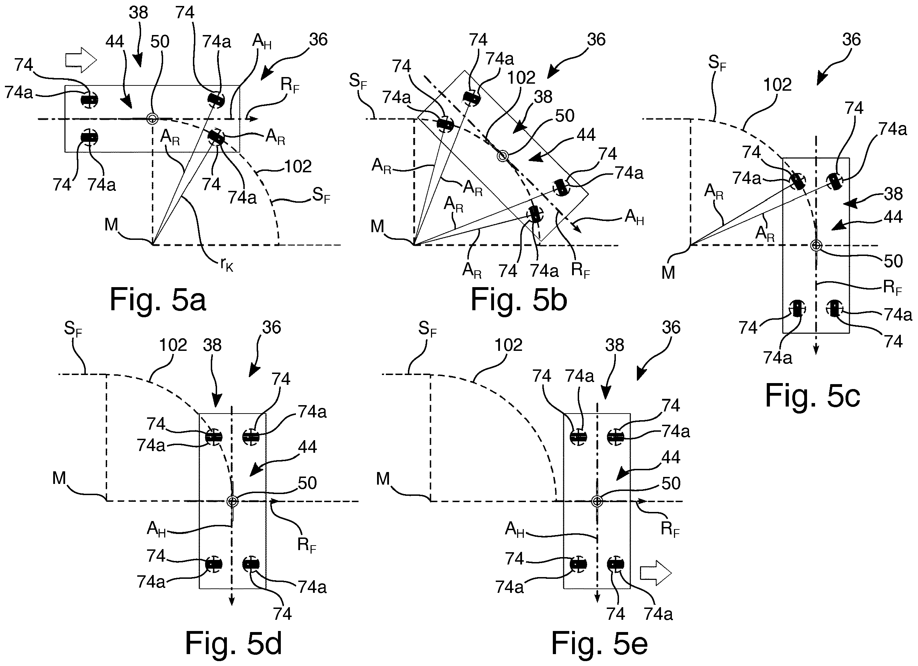

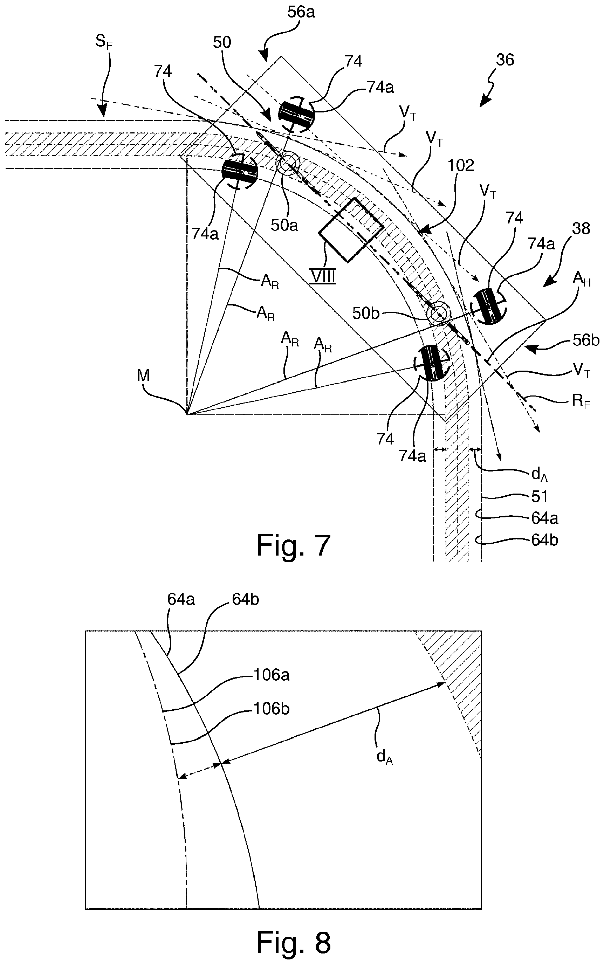

Die Förderstrecke S_{F} kann einen oder mehrere Kurvenbereiche 36 umfassen, welche in den Figuren 5a bis 8 dargestellt sind. Ein oder mehrere Kurvenbereiche 36 können im Bereich einer Behandlungseinrichtung 16 vorhanden sein. Sie können aber auch außerhalb der Behandlungseinrichtung 16 vorkommen, beispielsweise um Werkstücke 12 mäandernd durch die Behandlungsanlage 10 zu fördern. In den Kurvenbereichen 36 der Förderstrecke S_{F} beschreibt die Förderrichtung R_{F} stets einen senkrecht zu einem Radius r_{K} der Kurvenkrümmung verlaufenden Tangentialvektor V_{T}. Diese Tangentialvektoren V_{T} sind in der Figur 7 veranschaulicht; hierauf wird weiter unten näher eingegangen.

Die Behandlungseinrichtung 16 wird beim vorliegenden Ausführungsbeispiel im Durchlauf betrieben und hat dementsprechend an einem stirnseitigen Ende einen Eingang und am gegenüberliegenden Ende einen Ausgang, die in den Figuren nicht zu erkennen sind. Der Eingang und der Ausgang können als Schleuse ausgebildet sein, wie es an und für sich aus dem Stand der Technik bekannt ist. Die Behandlungseinrichtung 16 kann aber auch als Batch-System ausgelegt sein und gegebenenfalls nur einen einzigen Zugang haben, über den die Werkstücke 12 in den Behandlungsraum 20 hinein und nach der Behandlung auch wieder aus diesem heraus gefördert werden. Auch dieser einzige Zugang kann gegebenenfalls als Schleuse ausgebildet sein.

Das Fördersystem 32 umfasst mehrere freifahrende Transportwagen 38, von denen in den Figuren nur ein einzelner dargestellt ist. Auf den freifahrenden Transportwagen 38 werden die Werkstücke 12 entlang der Förderstrecke S_{F} in der Transportrichtung R_{F} durch die Behandlungseinrichtung 16 gefördert. Die Transportwagen 38 fahren auf einem Fahrboden 40 innerhalb eines unterhalb des Werkstück-Förderraumes 34 angeordneten Fahrraumes 42 und sind bodengebunden. Dem Fachmann sind Fördersysteme mit freifahrenden Transportwagen 38 auch als "fahrerloses Transportsystem" oder kurz FTS bekannt, die sich dadurch auszeichnen, dass die Transportwagen voneinander unabhängig antreibbar und lenkbar sind.

Jeder Transportwagen 38 umfasst ein Fahrwerk 44 mit einem Fahrwerkgehäuse 46, welches das Fahrwerk 44 zumindest teilweise nach außen hin begrenzt. Das Fahrwerk 44 definiert eine lediglich in den Figuren 5a bis 7 dargestellte Hauptachse und zugleich Hauptausrichtung A_{H}. Bei den vorliegenden Ausführungsbeispielen des freifahrenden Transportwagens 38 ist die Hauptachse die Längsachse, die konkret in Bezug auf die gezeigten Ausführungsbeispiele auch im Weiteren als Längsachse bezeichnet werden soll.

Die jeweils konkrete Hauptausrichtung A_{H} der Transportwagen 38 orientiert sich aber im Allgemeinen stets an der Richtung, in welcher der freifahrende Transportwagen 38 in Bezug auf eine festgelegte Front nach vorne fährt. Beispielsweise bei nicht gezeigten Ausführungsbeispielen des freifahrenden Transportwagens 38, die eine im Wesentlichen würfelförmige Form und/oder im Wesentlichen quadratische Grundfläche aufweisen, ist diese Definition von Relevanz. Die Hauptausrichtung A_{H} und die Förderrichtung R_{F} können also durchaus je nachdem, in welche Richtung sich der freifahrende Transportwagen 38 bewegt, gewinkelt zueinander verlaufen. Dies trifft speziell dann zu, wenn sich der Transportwagen 38 nicht in Bezug auf die festgelegte Front nach vorne bewegt. Insbesondere bei omnidirektional bewegbaren freifahrenden Transportwagen 38 ist diese Unterscheidung relevant; beispielsweise schließen die Längsachse sowie Hauptausrichtung A_{H} und die Transportrichtung R_{F} einen Winkel von 90° ein, wenn ein omnidirektionaler Transportwagen 38 mit festgelegter Front quer zur Seite bewegt wird.

Der Transportwagen 38 umfasst eine Befestigungseinrichtung 48, an welcher ein Werkstück 12 befestigt und durch den Werkstück-Förderraum 34 gefördert werden kann. Eine Verbindungseinrichtung 50 koppelt die Befestigungseinrichtung 48 mit dem Fahrwerk 44, gegebenenfalls außen mit dem Fahrwerkgehäuse 46. Die Verbindungseinrichtung 50 erstreckt sich durch einen Verbindungsdurchgang 51, der den Werkstück-Förderraum 34 mit dem Fahrraum 42 verbindet. Ein derartiger Verbindungsdurchgang 51 ist insbesondere deswegen erforderlich, weil schädigende Atmosphäre aus dem Behandlungsraum 20 aus dem Fahrraum 42 ferngehalten werden soll. Bei einer Lackierkabine kann eine solche schädigende Atmosphäre beispielsweise aufgrund von Overspray durch Lackpartikel angereichert sein. Bei einem Trockner kann die schädigende Atmosphäre aber auch derart temperiert und/oder mit Schadstoffen belastet sein, dass eine zu lange Exposition des Transportwagens 38 in dieser Atmosphäre nennenswerte Schäden am Transportwagen 38 hervorrufen könnte. Bei den in den Figuren 1 bis 5 veranschaulichten Ausführungsbeispielen ist die Verbindungseinrichtung 50 durch eine einzige vertikale Strebe ausgebildet.

Bei nicht eigens dargestellten Ausführungsbeispielen des Verbindungsdurchgangs 51 weist dieser eine Abschirmeinrichtung auf, die beispielsweise schuppen- oder lamellenartig aufgebaut sein kann. Ein derartiger Aufbau ermöglicht ein wanderndes Durchgangsfenster, welches von der Verbindungseinrichtung 50 beim Transport entlang der Förderstrecke S_{F} geöffnet wird und sich hinter dieser wieder verschließt. Somit kann sich zwar die Verbindungseinrichtung 50 entlang der Förderstrecke S_{F} durch den Verbindungsdurchgang 51 bewegen, der Transportwagen 38 bleibt dabei aber gegenüber der Schadatmosphäre weitestgehend abgeschirmt.

Der Transportwagen 38 erhält Positionsinformationen von einem Positionsinformationsgeber 52, mit denen der freifahrende Transportwagen 38 in der Behandlungsanlage 10 koordiniert navigiert werden kann. Der Positionsinformationsgeber 52 kann beispielsweise als Fernfeld-Sensoranordnung 54 ausgebildet und am Transportwagen 38 angeordnet sein. Wie eingangs erwähnt, ist es dem Transportwagen 38 dadurch unter anderem möglich, mit Hilfe von Hindernissensoren Hindernissen entlang der Förderstrecke S_{F} auszuweichen und zusätzlich oder alternativ mittels Wegmarkierungssensoren nicht eigens gezeigten Wegmarkierungselementen zu folgen. Die Fernfeld-Sensoranordnung 54 ist in Figur 1b in einem Heckbereich 56a des Transportwagens 38 dargestellt.

Der Positionsinformationsgeber 52 kann beispielsweise ein anlageninternes GPS-System 58 sein, welches lediglich durch eine in einem Frontbereich 56b des Transportwagens 38 angeordnete GPS-Empfangsantenne 60 repräsentiert ist. Um die von der Fernfeld-Sensoranordnung 54 und/oder dem GPS-System 58 bereitgestellten Positionsinformationen verarbeiten zu können, ist außerdem eine Steuereinrichtung 62 vom Transportwagen 38 mitgeführt.

Mittels der Steuereinrichtung 62 kann jeder Transportwagen individuell die von der Fernfeld-Sensoranordnung 54 und/oder dem GPS-System 58 bereitgestellten Positionsinformationen derart verarbeiten, dass dieser autonom entlang der Förderstrecke S_{F} durch die Behandlungsanlage 10 fährt. Die Steuereinrichtung 62 kann vollständig autark sein. Möglich ist es auch, dass die Steuereinrichtung 62, wie auch das GPS-System 58, mit einer oben erwähnten, anlageninternen Zentralsteuerung auf einer höheren Hierarchieebene kommunizieren. Die von der Fernfeld-Sensoranordnung 54 jedes Transportwagens 38 ermittelten Positionsinformationen werden zum Prozessieren dann, beispielsweise über GPS, W-LAN oder dergleichen, an diese Zentralsteuerung gesendet, die wiederum entsprechende Steueranweisungen an die Steuereinrichtung 62 der freifahrenden Transportwagen 38 übermittelt.

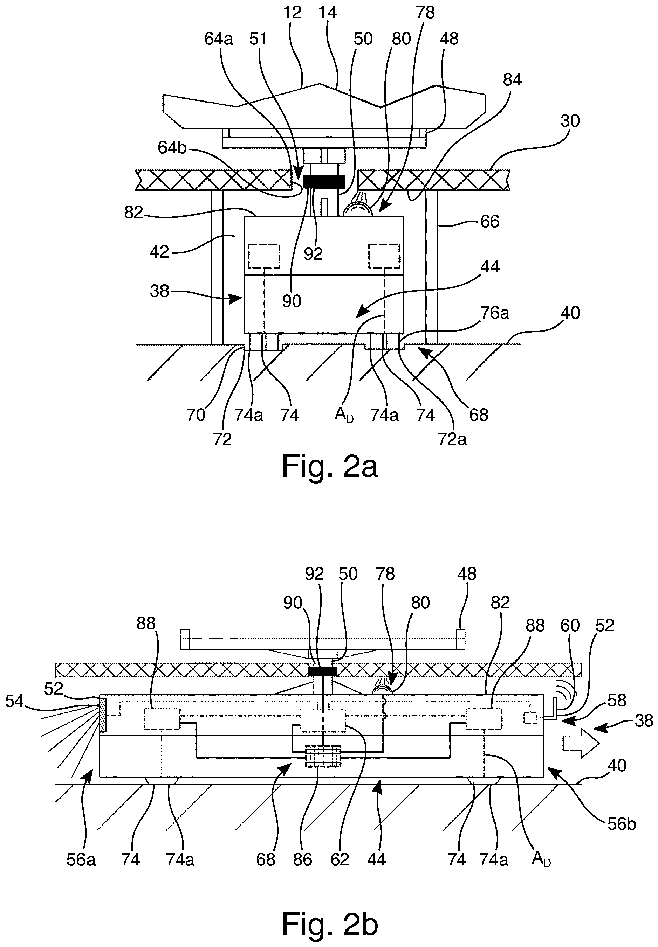

Bei einer solchen, aus dem Stand der Technik an und für sich bekannten Steuereinrichtung 62 kann es zu Schwierigkeiten kommen, wenn die Verbindungseinrichtung 50 entlang und in dem Verbindungsdurchgang geführt werden muss. Es besteht unter anderem das Problem, dass die Verbindungseinrichtung 50 mit einer Kante 64a und/oder einer Innenfläche 64b des Verbindungsdurchgangs 51 kollidieren kann, wie sie in den Figuren 1a und 2a gezeigt sind. Hierdurch entsteht Verschleiß sowohl am Verbindungsdurchgang 51 als auch an der Verbindungseinrichtung 50.

Ein weiteres Problem einer bekannten Steuereinrichtung 62 dieser Art ist, dass abhängig von der genauen Ausführung die Fernfeld-Sensoranordnung 54 oder das GPS-System 58 der Behandlungsanlage 10 gegebenenfalls jeweils nur eine sehr grobe Positionsbestimmung ermöglicht.

Dadurch kann es beispielsweise vorkommen, dass über die Fernfeld-Sensoranordnung 54 ein sich vermeintlich auf der Förderstrecke S_{F} befindliches Hindernis erkannt wird, woraufhin der Transportwagen 38 stoppt, obwohl sich das Hindernis eigentlich neben der Förderstrecke S_{F} befindet. Auch kann es vorkommen, dass der Transportwagen 38 bei der Einfahrt in einen Fahrraum 42 einer Behandlungseinrichtung 16 stoppt, da mittels der Fernfeld-Sensoranordnung 54 eine Fahrraumbegrenzung 66, die in den Figuren 1a, 2a und 3a bezeichnet ist, fälschlicherweise als Hindernis erkannt wird.

Wie in den Figuren 2a und 2b dargestellt ist, weist die Behandlungsanlage 10 gemäß der vorliegenden Erfindung nun eine Spurunterstützungseinrichtung 68 auf, die zusätzlich zu der Steuereinrichtung 62 die Förderrichtung R_{F} und die Hauptausrichtung A_{H} des Transportwagens 38 aufeinander abstimmen kann. Die Abstimmung erfolgt dabei im vorliegenden Ausführungsbeispiel aktiv und/oder passiv. Dies bedeutet, dass die Abstimmung sowohl motorisch als auch nicht motorisch durch Ausüben eines auf den Transportwagen 38 wirkenden Führungswiderstandes erfolgen kann.

Im passiven Fall weist das vorliegende Ausführungsbeispiel der Spurunterstützungseinrichtung 68 Führungsstrukturen 70 auf. Diese sind durch Fahrwerk-Führungsstrukturen 72 ausgebildet, können aber gegebenenfalls auch die Fahrraumbegrenzung 66 umfassen. Die Fahrwerk-Führungsstrukturen 72 sind vorliegend ihrerseits als Führungsrillen 72a im Fahrboden 40 des Fahrraums 42 ausgebildet, wie es Figur 2a veranschaulicht ist. Radanordnungen 74 des Transportwagens 38 können in diesen Führungsrillen 72a, die sich entlang der Förderstrecke S_{F} und in der Förderrichtung R_{F} erstrecken, abrollen. Dabei verlaufen die Führungsrillen 72a abgestimmt auf den Verlauf des Verbindungsdurchgangs 51. Die Breite der Führungsrillen 72a ist so bemessen, dass die Verbindungseinrichtung 50 stets in einem Toleranzabstand dazu den Kanten 64a und/oder Innenflächen 64b des Verbindungsdurchgangs gehalten wird. Der Toleranzabstand d_{A} wird insbesondere noch in Bezug auf die Figuren 7 und 8 näher erläutert und ist auch nur dort gezeigt.

Gegebenenfalls umfasst der Transportwagen 38 eine Sensorik, die erfasst, wenn eine Radanordnung 74 gegen eine Flanke einer Führungsrille 72a anstößt, so dass eine Gegenbewegung initiiert werden kann.

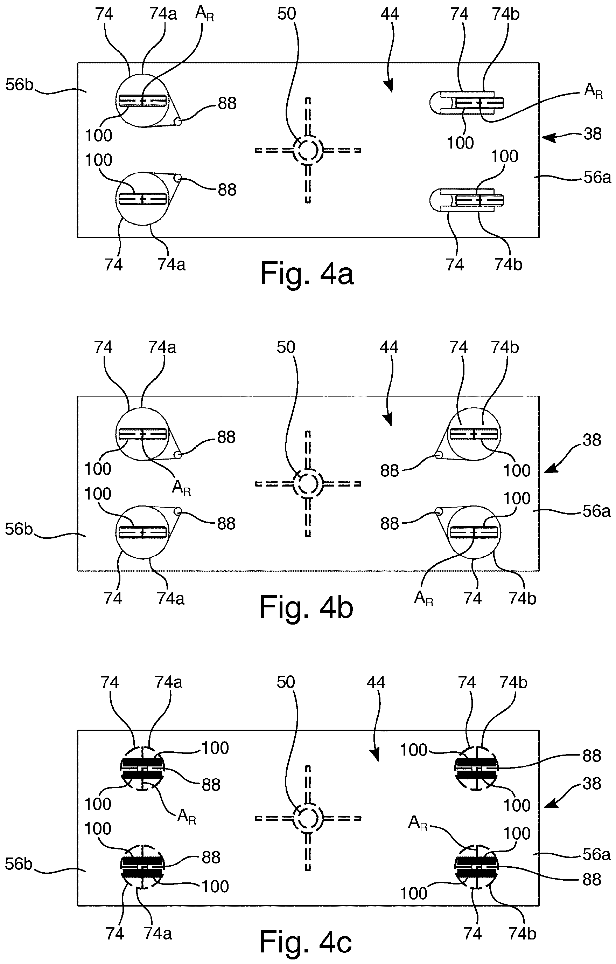

Die Radanordnungen 74 des Transportwagens 38 sind als aktiv drehbare Radanordnungen 74a ausgeführt. Diese können durch einen von den Führungsrillen 72a ausgeübten Führungswiderstand aber dennoch passiv um eine Drehachse A_{D} gedreht werden, wenn kein motorischer Energieeintrag auf die Drehachse A_{D} erfolgt. Die Drehachse A_{D} verläuft vorliegend jeweils senkrecht zu Radaufhängungsachsen A_{R} der Radanordnungen 74a, wobei nur einige Radaufhängungsachsen A_{R} in den Figuren 4a bis 5e bezeichnet sind. Wenn ein Transportwagen 38 die optimal zu haltende Spur verlässt, kann somit durch Innenwände 76 der Führungsrillen 72a ein Führungswiderstand auf die Radanordnungen 74a ausgeübt werden, wodurch verhindert wird, dass der Transportwagen 38 noch weiter den für die Verbindungseinrichtung 50 zu durchfahrenden Optimalbereich verlässt.

Zusätzlich hierzu oder gegebenenfalls auch alternativ weist das Ausführungsbeispiel gemäß den Figuren 2a und 2b eine Nahfeld-Sensoranordnung 78 auf, die vorliegend mindestens eine Kamera 80 umfasst. Die Kamera 80 ist auf einer Oberseite 82 des Fahrwerkgehäuses 46 angeordnet und ist auf eine Unterseite 84 des Verbindungsdurchgangs 51 gerichtet. Dort nimmt die Kamera 80 fortlaufend oder in festgelegten Intervallen, je nach Anwendungsbedarf, eine Kante 64a oder Innenfläche 64b des Verbindungsdurchgangs 51 auf. Dadurch ermittelte Lage-Rohinformationen werden an eine im Transportwagen 38 angeordnete Spursteuereinheit 86 weitergeleitetet. Die Kamera 80 kann optional ebenfalls vor oder hinter einem durch den Verbindungsdurchgang 51 hindurchragenden Abschnitt der Verbindungseinrichtung 50 angeordnet sein. Ebenso ist es möglich, die Kamera 80 auf eine nicht mit einem Bezugszeichen versehene Oberseite des Verbindungsdurchgangs 51 zu richten.

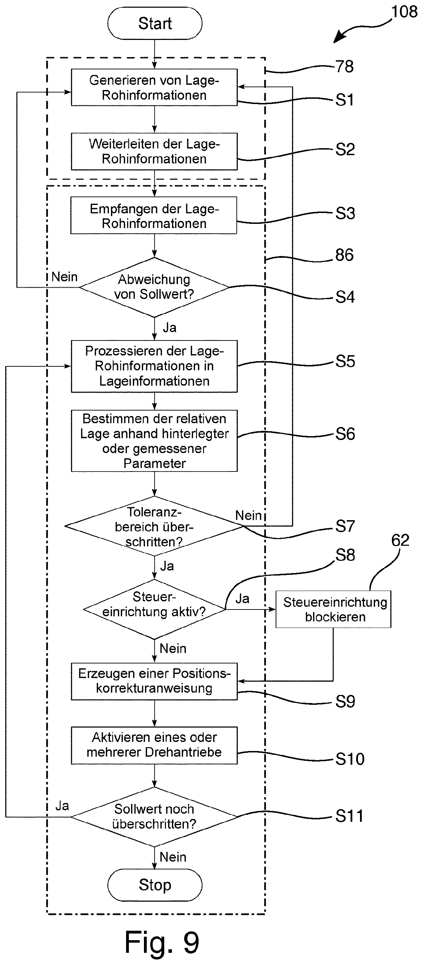

Die Spursteuereinheit 86 vergleicht diese Lage-Rohinformationen zunächst mit hinterlegten und festgesetzten Sollwerten (siehe auch Schritt S4 in Figur 9). Wie eingangs erwähnt, kann das System beispielsweise mit Helligkeitswerten oder Kontrastwerten arbeiten. Ist dann beispielsweise ein mittlerer Helligkeitswert des von der Kamera 80 aufgenommenen Bildes heller als ein hinterlegter Sollwert für die Helligkeit, werden die Lage-Rohinformationen zu Lageinformationen prozessiert, die eine genauere Auskunft darüber erlauben, in welcher Lage sich der Transportwagen 38 hinsichtlich des Verbindungsdurchgangs 51 befindet. Die Prozessierung beinhaltet hauptsächlich das Bereinigen von Hintergrundsignalen, damit die Lage-Rohinformationen handlicher und vergleichbarer werden. Ebenso wird im Rahmen der Prozessierung überprüft, ob sich der Transportwagen 38 noch innerhalb des Toleranzabstandes d_{A} zur Kante 64a oder Innenfläche 64b des Verbindungsdurchgangs 51 befindet. Es ist aber auch möglich, die Lageinformationen nicht direkt mit dem Toleranzabstand d_{A} zu vergleichen, sondern mit testweise ermittelten Toleranzbereichen, in welchen sich die Lageinformationen einer bestimmten Quelle bewegen dürfen.

Die Spursteuereinheit 86 erfasst nun beispielsweise, dass sich die Kamera 80 direkt unter dem Verbindungsdurchgang 51 befindet und somit eine Positionskorrekturbewegung entlang der Förderrichtung R_{F} nach rechts zu erfolgen hat. Diese Positionskorrekturbewegung erfolgt so lange, bis sich die von der Spursteuereinheit 86 prozessierten Lageinformationen wieder in einem Sollrahmen befinden.

Für die Positionskorrekturbewegung erzeugt die Spursteuereinheit 86 eine Positionskorrekturanweisung, durch welche Drehantriebe 88, die mit aktiv drehbaren Radanordnungen 74a gekoppelt sind, so angesteuert werden, dass die zugehörige Radanordnung 74a bei fahrendem Transportwagen 38 um die Drehachse A_{D} verdreht wird. Ein Drehantrieb 88 kann als gesonderte Baueinheit vorgesehen oder auch lediglich dadurch ausgebildet sein, dass steuerungstechnisch Möglichkeiten geschaffen sind; hierauf wird weiter unten nochmals eingegangen.

Ebenso kann die Kamera 80 aber auch, beispielsweise durch Kantenerkennung, einen Verlauf der Kante 64a oder der Innenfläche 64b des Verbindungsdurchgangs 51 erfassen. Dieses Vorgehen ist für das Erzeugen einer Positionskorrekturanweisung wesentlich weniger anfällig für etwaige Prozesserierungsfehler als das oben beschriebene Arbeiten mit Helligkeitswerten. Die Spursteuereinheit 86 vergleicht die Lage-Rohinformationen dann beispielsweise über einen Kantenerkennungsalgorithmus mit einem hinterlegten Soll-Verlauf. Durch Transformation eines ermittelten Ist-Verlaufs zum Soll-Verlauf kann dann mittelbar eine Positionskorrekturanweisung erzeugt werden, durch welche die Drehantriebe 88 so angesteuert werden können, dass der Ist-Verlauf im Wesentlichen dem Soll-Verlauf entspricht.

Grundsätzlich übernimmt die Spursteuereinheit 86 die Steuerung des Transportwagens 38, wenn sich dieser im Bereich eines Verbindungsdurchgangs 51 befindet, und die Steuereinrichtung 62 wird blockiert.

Gegebenenfalls kann die Steuereinrichtung 62 während des oben beschriebenen Prozesses, bzw. bei Erreichen des Verbindungsdurchgangs 51, zunächst noch aktiv sein. Dann muss vermieden werden, dass die Steuereinrichtung 62 und die Spursteuereinheit 86 um die Anweisungshoheit konkurrieren. Um zu vermeiden, dass der Transportwagen 38 aufgrund dieses Konflikts liegen bleibt und somit eine Produktionsverzögerung bewirkt, kann die Spursteuereinheit 86 bei Vorliegen von Lageinformationen, die außerhalb eines Toleranzbereichs für die Lageinformationen liegen, oder zusätzlich oder alternativ bei Überschreiten des Toleranzabstandes d_{A} die Steuereinrichtung 62 blockieren. Die Spursteuereinheit 86 steuert dann autonom den Transportwagen 38. In Abwesenheit einer Lageinformation, die die bereits erwähnten Kriterien erfüllt, wird die Blockieranweisung von der Spursteuereinheit 86 nicht mehr aufrechterhalten, wodurch die Steuereinrichtung 62 die Steuerung des Transportwagens 38 wieder übernehmen kann.

Die Nahfeld-Sensoranordnung 78 des Transportwagens 38 umfasst bei dem vorliegenden Ausführungsbeispiel zusätzlich ein Kontaktelement 90, welches ein Rollelement oder ein Gleitelement sein kann, welches an der Verbindungseinrichtung 50 angeordnet ist und welches einen Kraftsensor 92 umfasst, der eine auf das Kontaktelement 90 ausgeübte Kraft detektieren kann. In Abhängigkeit dieser detektierten Kraft erzeugt die Spursteuereinheit 86 dann eine Positionskorrekturanweisung für die Radanordnungen 74a. Die von dem Kraftsensor 92 bereitgestellten Lage-Rohinformationen können gemeinsam mit von der Kamera 80 bereitgestellten Lage-Rohinformationen von der Spursteuereinheit 86 verarbeitet werden. Somit ist eine besonders zuverlässige Lagebestimmung möglich. Alternativ kann auf die Kamera 80 bzw. allgemein ein optisches System verzichtet werden und nur das Kontaktelement 90 zum Einsatz kommen.

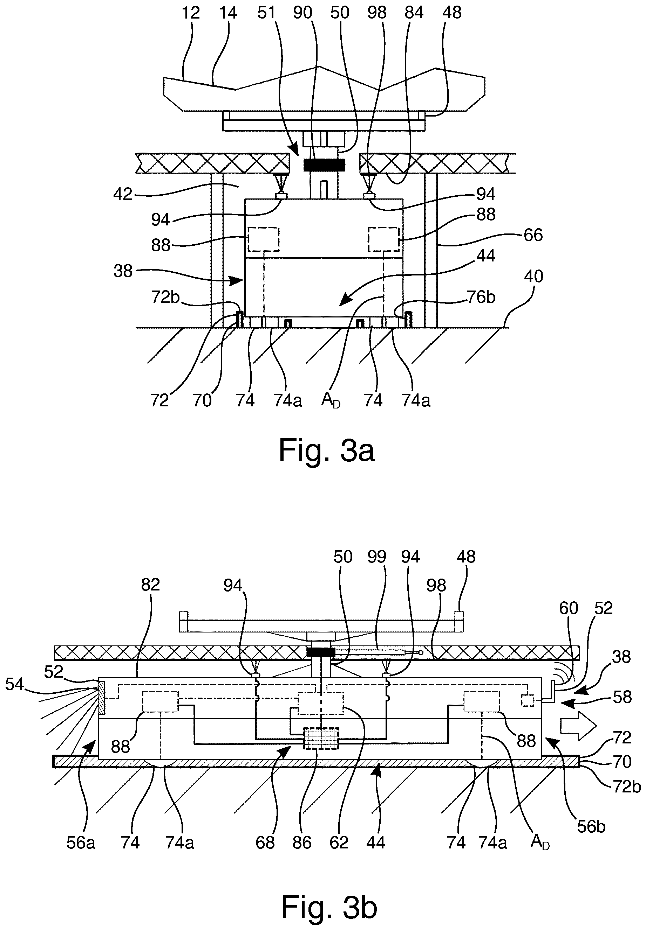

In den Figuren 3a und 3b ist eine Abwandlung der Spurunterstützungseinrichtung 68 veranschaulicht.

Zunächst sind dort die mechanischen Fahrwerk-Führungsstrukturen 72 nicht als Führungsrillen 72a ausgebildet, sondern als Führungsbleche 72b. In ähnlicher Weise wie die Führungsrillen 72a verlaufen die Führungsbleche 72b angepasst an den Verbindungsdurchgang 51 entlang der Förderstrecke S_{F} und im Einklang mit der variierenden Förderrichtung R_{F}. Die Führungsbleche 72b weisen ebenfalls Innenwände 76b auf, die einen Führungswiderstand auf Radanordnungen 74 ausüben können.

Als weiterer Unterschied zum Ausführungsbeispiel der Figuren 2a und 2b weist die vorliegende Spurunterstützungseinrichtung 68 statt einer Kamera 80 zwei optische Scanner 94 auf, die zum Beispiel als nicht eigens mit einem Bezugszeichen versehene Laserscanner ausgeführt sind. Diese richten fortlaufend einen Lichtstrahl 96 auf an der Unterseite 84 des Verbindungsdurchgangs 51 angeordnete Markierungselemente 98. Bei nicht eigens gezeigten Abwandlungen kann das Licht vorwiegend aus dem roten oder infraroten Spektralbereich zusammengesetzt sein. Die Markierungselemente 98 können sowohl als optisch scanbare Strukturen, beispielsweise als fortlaufender Barcode, als auch als sich regelmäßig wiederholende geometrische Strukturen ausgeführt sein. Ebenfalls können die Markierungselemente 98 in weiteren Ausführungsbeispielen entlang der Fahrraumbegrenzung 66 angeordnet sein.

Bei nicht eigens gezeigten Abwandlungen können alternativ oder ergänzend ein oder mehrere Ultraschall- oder Radar-Sensoren vorhanden sein, die mit reflektierenden Strukturen zusammenarbeiten, so dass Lage-Rohinformationen ermittelt werden können, die von der Spursteuereinheit 86 zu Lageinformationen prozessierbar sind.

Beim vorliegenden Ausführungsbeispiel messen die optischen Scanner 94 fortlaufend das entlang eines nicht gezeigten photosensitiven Sensors auftreffende Reflexionsspektrum des von den Markierungselementen 98 zurückgeworfenen Lichtes. Im Vergleich zu dem vorherigen Ausführungsbeispiel weist das in den Figuren 3a und 3b dargestellte Ausführungsbeispiel keinen in einem Kontaktelement 90 angeordneten Kraftsensor 92 auf. Vielmehr ist an der Verbindungseinrichtung 50 ein Messtaster 99 angeordnet, der der Verbindungseinrichtung 50 im Verbindungsdurchgang 51 in Richtung der Vorwärtsbewegung vorauseilt. Somit können schon frühzeitig Verlaufsänderungen des Verbindungsdurchgangs 51 detektiert werden. Der Messtaster 99 kann dabei an einer nicht dargestellten bewegbaren Führung angeordnet sein.

In einem nicht dargestellten Ausführungsbeispiel ist an der Verbindungseinrichtung 50 zusätzlich oder gegebenenfalls alternativ ein als Dehnungsmessstreifen ausgebildeter Kraftsensor 92 angeordnet, der von der Nahfeld-Sensoranordnung 78 umfasst ist. Mittels diesem können auch minimale reversible Auslenkungen der Verbindungseinrichtung 50 bei einem Entlanggleiten, Entlangrollen oder Anstoßen derselben an der Kante 64a oder der Innenfläche 64b des Verbindungsdurchgangs 51 detektiert werden. Die von dem Dehnungsmessstreifen erzeugten Lage-Rohinformationen werden dabei von der Spursteuereinheit 86 in vergleichbarer Weise gehandhabt wie die anderer Kraftsensoren 92. Ähnlich wie bereits zu der Kamera 80 und anderen Kraftsensoren 92, werden diese Lage-Rohinformationen fortlaufend mit Sollwerten verglichen. Weichen die Lage-Rohinformationen von den Sollwerten ab, werden die Lage-Rohinformationen von der Spursteuereinheit 86 zu Lageinformationen prozessiert. Insofern diese gemittelten Lageinformationen einen Toleranzbereich überschreiten, erzeugt die Spursteuereinheit eine Positionskorrekturanweisung, wodurch die Drehantriebe 88 aktiviert werden. Dies ist beispielsweise dann der Fall, wenn das Licht der optischen Scanner 94 nicht mehr auf die Markierungselemente 98 auftrifft, oder wenn die Kraftsensoren eine über einem Rauschwert liegende Kraft messen.

Wie auch bereits beim Ausführungsbeispiel der Figuren 2a und 2b erzeugt die Spursteuereinheit 86 dann so lange eine Positionskorrekturanweisung, bis sich die Verbindungseinrichtung 50 wieder in einem Toleranzabstand d_{A} von der Kante 64a oder der Innenfläche 64b des Verbindungsdurchgangs 51 befindet.

In den Figuren 4a bis 4c sind nun drei Ausführungsbeispiele für mögliche Ausgestaltungen des Fahrwerks 44 dargestellt. Die freifahrenden Transportwagen 38 sind jeweils von unten veranschaulicht. Der in der Figur 4a gezeigte Transportwagen 38 weist in dem Frontbereich 56b aktiv drehbare Radanordnungen 74a auf, die jeweils mit einem Drehantrieb 88 gekoppelt sind und an denen jeweils ein Rad 100 angeordnet ist. Hierbei schneidet die Drehachse A_{D} die Lenkachse. Im Heckbereich 56a sind drehbare Radanordnungen 74b einer anderen Art angeordnet, bei denen die Drehachse A_{D} die Lenkachse nicht schneidet; die Lenkachse bzw. das Lenklager ist dort als Kreis zu erkennen, der gegenüber der Drehachse A_{D} in Richtung des Frontbereichs 56b versetzt ist. Der Transportwagen in Figur 4b weist vier aktiv drehbare Radanordnungen 74a mit jeweils einem daran angeordneten Rad 100 auf. In Figur 4c ist ein Transportwagen 38 gezeigt, der vier aktiv drehbare Radanordnungen 74a mit jeweils zwei daran angeordneten Rädern 100 aufweist. Der Drehantrieb 88 ist bei solchen Radpaaren mit zwei Rädern 100 vorzugsweise dadurch ausgebildet, dass die beiden Räder 100 gegenläufig gedreht werden können, so dass sich das Radpaar, d.h. die dadurch gebildete Radanordnung 74a, insgesamt um die Drehachse A_{D} dreht.

Weitere Ausführungsbeispiele sind aus Gründen der Einfachheit und Übersichtlichkeit nicht eigens dargestellt. Ein erstes dieser weiteren Ausführungsbeispiele weist im Heckbereich 56a bezogen auf eine Drehung fixierte Radanordnungen 74 auf, die folglich nicht um eine Drehachse A_{D} drehbar sind und insofern auch nicht ausgelenkt werden können. Bei einem zweiten Ausführungsbeispiel sind drei aktiv drehbare Radanordnungen 74a entlang eines Kreisumfangs angeordnet. Nicht gezeigte Ausführungsbeispiele können auch lediglich drei oder auch fünf oder mehr Radanordnungen 74 aufweisen.

In den Figuren 5a bis 5e ist ein Ausführungsbeispiel des Transportwagens 38 in mehreren Bewegungsphasen in einem Kurvenbereich 36 gezeigt. Der Transportwagen 38 fährt entlang der Förderstrecke S_{F} mit variierender Förderrichtung R_{F}. Die Förderstrecke S_{F} weist im Kurvenbereich 36 einen Kurvenabschnitt 102 auf. Zu erkennen ist, dass die Spursteuereinheit 86 den Transportwagen 38 derart entlang der Förderstrecke S_{F} steuert, dass die Hauptausrichtung A_{H} von der Einfahrt in den Kurvenabschnitt 102 in Figur 5a bis zur Position gemäß Figur 5c mit der Förderrichtung R_{F} übereinstimmt.

Dies wird dadurch bewirkt, dass die Radaufhängungsachsen A_{R} der Radanordnungen 74, die sich in dem Kurvenabschnitt 102 befinden, durch die Spursteuereinheit 86 stets derart ausgerichtet sind, dass diese auf einen Krümmungsmittelpunkt M des Kurvenabschnittes 102 gerichtet sind und während der Bewegung entlang des Kurvenabschnittes 102 gerichtet bleiben. Um der Spursteuereinheit 86 zusätzlich oder alternativ zu den bisher genannten Möglichkeiten weitere Lage-Rohinformationen bereitzustellen, kann für jede Radanordnung 74jeweils ein nicht dargestellter Drehwertgeber vorhanden sein, der eine Drehstellung der Radanordnung 74 an die Spursteuereinheit 86 übermittelt und von der Nahfeld-Sensoranordnung 78 umfasst ist. Diese Drehstellungen können dann mit für bestimmte Abschnitte der Förderstrecke S_{F} vordefinierten Drehstellungen durch die Spursteuereinheit 86 abgeglichen werden und bei Abweichungen von den Sollwerten an diese angepasst werden.

Dass die Hauptausrichtung A_{H} nicht immer parallel zur jeweils aktuellen Förderrichtung R_{F} verläuft, ist in den Figuren 5d und 5e veranschaulicht. Hier verläuft die Hauptausrichtung A_{H} senkrecht zur Förderrichtung R_{F} und der Transportwagen 38 wird zur Seite und quer zu seiner Längsachse A_{H} verfahren.

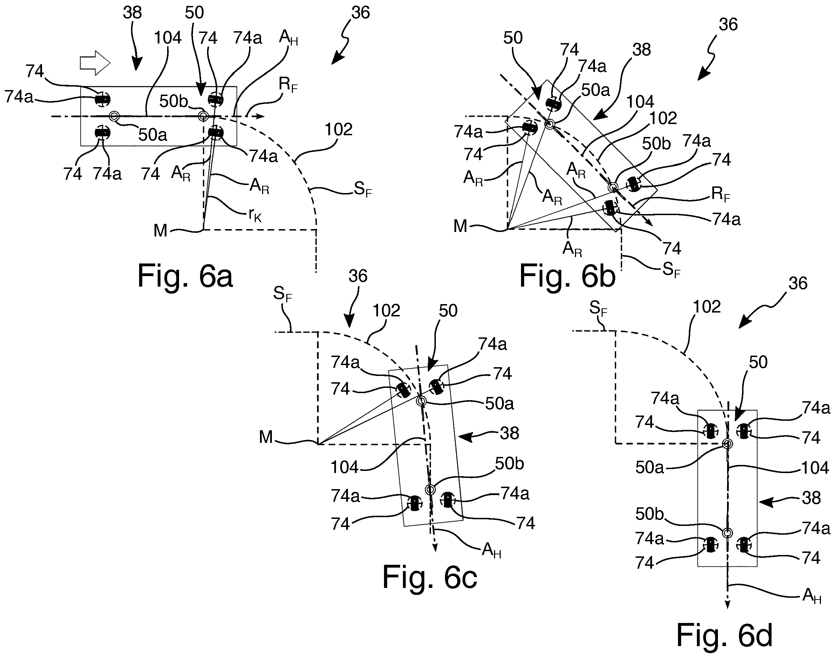

In den Figuren 6a bis 6d ist in ähnlicher Weise wie in den Figuren 5a bis 5e ein weiteres Ausführungsbeispiel eines Transportwagens 38 dargestellt. Bei diesem Transportwagen 38 umfasst die Verbindungseinrichtung 50 zwei vertikale Streben, die dort mit 50a und 50b bezeichnet sind und in Richtung der Längsachse A_{H} voneinander beabstandet sind.

Die Nahfeld-Sensoranordnung 78 ist in diesem Fall an die beiden vorhandenen Streben 50a, 50b angepasst. Beispielsweise ist für jede Strebe 50a, 50b jeweils eine gesonderte Kamera 80 vorhanden, welche den Verbindungsdurchgang 51 vor jeder Strebe 50a, 50b scannt. Entsprechendes gilt für mehr als zwei Streben 50 oder dergleichen.

Dieses Ausführungsbeispiel und die Figuren 6a bis 6d sowie 7 und 8 veranschaulichen, wie mit der erfindungsgemäßen Spurunterstützungseinrichtung 68 die Hauptausrichtung A_{H} und die Förderrichtung R_{F} bei vorhandenen Sehneneffekten aufeinander abgestimmt werden können. Derartige "Sehnen", die in den Figuren 6a bis 6d mit 104 bezeichnet sind, bilden sich immer dann aus, wenn mehr als nur ein beispielsweise stangenförmiger Abschnitt der Verbindungseinrichtung 50 sich durch den Verbindungsdurchgang 51 hindurch erstreckt. Die Steuerung des Transportwagens 38 entlang eines Kurvenabschnittes 102 muss dann so behandelt werden, als würde etwas entlang dem Verbindungsdurchgang 51 gefördert werden, welches die Längserstreckung der Sehne 104 aufweist.

Die Figur 7 zeigt hierzu eine Detailansicht des Transportwagens 38 in dem Kurvenabschnitt 102 der Förderstrecke S_{F} in der Position gemäß Figur 6b. Ebenfalls dargestellt sind die Tangentialvektoren V_{T} der Förderrichtung R_{F} bezogen auf verschiedene Positionen des Transportwagens 38 in dem Kurvenbereich 36. Figur 8 zeigt den Ausschnitt VIII in Figur 7 in vergrößertem Maßstab und veranschaulicht den Toleranzabstand d_{A}, in welchem die Verbindungseinrichtung 50 mindestens von der Kante 64a oder der Innenfläche 64b des Verbindungsdurchgangs 51 gehalten wird.

Dargestellt sind ein Ist-Verlauf 106a der Kante 64a oder der Innenfläche 64b und ein Soll-Verlauf 106b der Kante 64a oder der Innenfläche 64b. Die Spursteuereinheit 86 erzeugt bei Ermitteln dieser Abweichung von Ist-Verlauf 106a zu Soll-Verlauf 106b eine Positionskorrekturanweisung, wodurch die Radanordnungen 74 durch die Drehantriebe 88 derart angesteuert werden, dass der Transportwagen eine Korrekturbewegung ausführt, bis sich Ist-Verlauf 106a und Soll-Verlauf 106b wieder im Wesentlichen entsprechen. Dabei ist der genaue Soll-Verlauf 106b vor allem davon abhängig, wie der Toleranzabstand d_{A} bemessen bzw. vorgegeben ist.

Figur 9 zeigt ein Ablaufdiagramm eines von der Spursteuereinheit 86 ausgeführten Verfahrens 108. Von der Nahfeld-Sensoranordnung 78 werden in Schritt S1 permanent Lage-Rohinformationen generiert, die in Schritt S2 an die Spursteuereinheit 86 weitergeleitet werden. In der Spursteuereinheit 86 wird dann in Schritt S4 nach Empfangen der Lage-Rohinformationen in Schritt S3 überprüft, ob von den übermittelten Lage-Rohinformationen ein festgelegter Sollwert überschritten wird. Ist dies nicht der Fall, springt das Verfahren 108 wieder zu Schritt S1. Wird aber ein Sollwert überschritten, werden die Lage-Rohinformationen von der Spursteuereinheit 86 in Schritt S5 zu Lageinformationen prozessiert. Anhand hinterlegter oder gemessener Parameter werden diese Lageinformationen nun in Schritt S6 dazu verwendet, eine relative Lage des Transportwagens 38 hinsichtlich einer Fahrumgebung, insbesondere hinsichtlich der Kante 64a oder Innenfläche 64b eines Verbindungsdurchgangs 51, zu bestimmen.

Der Punkt, hinsichtlich welchem die relative Lage bestimmt wird, ist in den gezeigten Ausführungsbeispielen jeweils der Ort oder die Orte am Transportwagen 38, an welchem die Kamera 80 oder die optischen Scanner 94 angeordnet sind. Bei nicht eigens gezeigten Ausführungsbeispielen ist in der Spursteuereinheit 86 eine Repräsentation relevanter Punkte des Transportwagens 38 in einem XYZ-Koordinatensystem hinterlegt. Mittels der Lageinformationen, mit denen eine relative Lage der Kamera 80 oder der optischen Scanner 94 hinsichtlich der Fahrumgebung ermittelt werden kann, kann durch eine entsprechende Matrixtransformation auch die relative Lage der Verbindungseinrichtung 50 oder anderer Punkte des Transportwagens 38 relativ zur Fahrumgebung ermittelt werden.

In einem Verfahrensschritt S7 wird nun überprüft, ob der Punkt, dessen relative Lage mittels der Lageinformationen ermittelt wurde, einen Toleranzabstand d_{A} hinsichtlich der Fahrumgebung überschritten hat. Ist dies nicht der Fall, beginnt das Verfahren erneut mit Schritt S1. Ist dies allerdings der Fall, wird in Schritt S8 des Verfahrens 108 überprüft, ob eine Steuereinrichtung 62 aktiv ist und Steueranweisungen an das Fahrwerk 44 des Transportwagens 38 übermittelt. Um insbesondere aufgrund Konkurrenz bezüglich der Anweisungshoheit Produktionsausfälle zu vermeiden, blockiert die Spursteuereinheit 86 die Steuereinrichtung 62 für die Zeit, in welcher die Spursteuereinheit 86 den Transportwagen 38 steuert. In diesem Fall kontrolliert die Spursteuereinheit 86 nicht nur die Drehantriebe 88, sondern auch die übrige Antriebsmechanik des Transportwagens 38, die aus Gründen der Übersichtlichkeit nicht eigens dargestellt ist.

In einem Verfahrensschritt S9 wird daraufhin eine Positionskorrekturanweisung erzeugt, anhand welcher in einem Verfahrensschritt S10 die Drehantriebe 88 der Radanordnungen 74 aktiviert werden.

Sobald die von der Nahfeld-Sensoranordnung 78 übermittelten Lage-Rohinformationen den hinterlegten Sollwert nicht mehr überschreiten oder unterschreiten, übernimmt die Steuereinrichtung 62 erneut die Steuerung des Transportwagens 38, also beispielsweise bei bzw. nach Verlassen des Fahrraumes 42.

Hierfür erforderlich, allerdings in Figur 9 nicht dargestellt, ist zusätzlich, dass die Steuereinrichtung 62 ein ähnliches Verfahren ausführt. So kann beispielsweise daran, dass eine Fernfeld-Sensoranordnung 54 der Steuereinrichtung 62 Positionsinformationen ermittelt, die nach Abgleich mit hierfür vorgesehenen Sollwerten Rückschlüsse darüber erlauben, wie die Fahrumgebung des Transportwagens 38 ausgebildet ist, eine Blockieranweisung der Spursteuereinheit 86 auch ignoriert werden.

Bei einem weiteren nicht dargestellten Ausführungsbeispiel wird, um zu vermeiden, dass aufgrund über- oder unterschrittener Sollwerte die Spursteuereinheit 86 die Steuerung des Transportwagens 38 übernimmt, obwohl eine derartige Feinsteuerung nicht erforderlich ist, die Spursteuereinheit 86 erst dann aktiviert, wenn von der Fernfeld-Sensoranordnung 54 eine spezifische Markierung detektiert wird. Diese kann beispielsweise an einem Eingang eines Fahrraums 42 unter einem Werkstück-Förderraum 34 angeordnet sein. Entsprechend kann dann an einem Ausgang des Fahrraums 42 eine weitere Markierung angeordnet sein, welche bewirkt, dass eine Blockieranweisung der Spursteuereinheit 86 ignoriert wird oder alternativ die Spursteuereinheit 86 deaktiviert. Diese kann dann bei erneuter Detektion einer entsprechenden Markierung reaktiviert werden.

## Patentansprüche

1. Behandlungsanlage zum Behandeln von Werkstücken (12), insbesondere zum Behandeln von Fahrzeugkarosserien (14), mit
a) einem Fördersystem (32), das mehrere freifahrende Transportwagen (38) umfasst, mit denen jeweils zumindest ein Werkstück (12) entlang einer Förderstrecke (S_{F}) in variierbaren Förderrichtungen (R_{F}) förderbar ist;
wobei
b) jeder freifahrende Transportwagen (38) jeweils umfasst:
ba) ein Fahrwerk (44), das eine Hauptachse und Hauptausrichtung (A_{H}) des freifahrenden Transportwagens (38) definiert, eine Befestigungseinrichtung (48) für zumindest ein Werkstück (12) und eine Verbindungseinrichtung (50), die das Fahrwerk (44) mit der Befestigungseinrichtung (48) koppelt; und
bb) eine Steuereinrichtung (62), die dazu eingerichtet ist, in Abhängigkeit von Positionsinformationen, die von zumindest einem Positionsinformationsgeber (52) bereitgestellt werden, das Fahrwerk (44) entlang der Förderstrecke (S_{F}) zu steuern;
c) entlang der Förderstrecke (S_{F}) ein Fahrraum (42) vorhanden ist, der über einen Verbindungsdurchgang (51) mit einem Werkstück-Förderraum (34) verbunden ist, wobei das Fahrwerk (44) in dem Fahrraum (42) bewegbar ist, so dass die Befestigungseinrichtung (48) in dem Werkstück-Förderraum (34) mitgeführt wird und sich die Verbindungseinrichtung (50) durch den Verbindungsdurchgang (51) hindurch erstreckt,
**dadurch gekennzeichnet, dass**
d) zusätzlich zur Steuereinrichtung (62) des freifahrenden Transportwagens (38) eine mechanische und/oder sensorabhängige Spurunterstützungseinrichtung (68) vorgesehen ist, die dazu eingerichtet ist, die Hauptausrichtung (A_{H}) des freifahrenden Transportwagens (38) und die Förderrichtung (R_{F}) anhand von wenigstens einem von dem Verbindungsdurchgang (51) abhängigen Parameter aktiv und/oder passiv aufeinander abzustimmen.

2. Behandlungsanlage nach Anspruch 2, **dadurch gekennzeichnet, dass** der von dem Verbindungsdurchgang (51) abhängige Parameter zumindest mittelbar
a) der Verlauf einer Kante (64a) und/oder einer Innenfläche (64b) des Verbindungsdurchgangs (51) in Förderrichtung (R_{F}); und/oder
b) die Neigung der Innenfläche (64b) des Verbindungsdurchgangs (51) zu einer in Förderrichtung (R_{F}) verlaufenden vertikalen Ebene; und/oder
c) die lokale Breite des Verbindungsdurchgangs (51) ist.

3. Behandlungsanlage nach einem der vorhergehenden Ansprüche, **dadurch gekennzeichnet, dass** die Hauptausrichtung (A_{H}) der freifahrenden Transportwagen (38) und die Förderrichtung (R_{F}) durch die Spurunterstützungseinrichtung (68) derart aufeinander abstimmbar sind, dass
a) die Hauptausrichtung (A_{H}) nach oder während einer Abstimmung des freifahrenden Transportwagens (38) stets parallel oder senkrecht zur Förderrichtung (R_{F}) verläuft bzw. gehalten wird; und/oder
b) zumindest ein Abschnitt der Verbindungseinrichtung, der sich durch den Verbindungsdurchgang (51) hindurch erstreckt, nach oder während der Abstimmung in einem vorgegebenen Toleranzabstand (d_{A}) von zumindest einer Kante (64a) und/oder einer Innenfläche (64b) des Verbindungsdurchgangs (51) vorliegt bzw. gehalten ist.

4. Behandlungsanlage nach Anspruch 3, **dadurch gekennzeichnet, dass** der Toleranzabstand (d_{A}) wenigstens 3 bis 7 mm, vorzugsweise wenigstens 6 bis 9mm und besonders vorzugsweise wenigstens 8 bis 14 mm beträgt.

5. Behandlungsanlage nach einem der vorhergehenden Ansprüche, **dadurch gekennzeichnet, dass**
a) die Spurunterstützungseinrichtung (68) zum aktiven Abstimmen der Hauptausrichtung (A_{H}) und der Förderrichtung (R_{F}) aufeinander zumindest eine Nahfeld-Sensoranordnung (78) aufweist, die mit einer Spursteuereinheit (86) gekoppelt ist,
wobei
b) die Spursteuereinheit (86) über von der Nahfeld-Sensoranordnung (78) ermittelbare Lage-Rohinformationen eine relative Lage eines oder mehrerer Punkte der freifahrenden Transportwagen (38) hinsichtlich eines oder mehrerer von dem Verbindungsdurchgang (51) abhängiger Parameter jeweils zumindest indirekt bestimmen kann.

6. Behandlungsanlage nach Anspruch 5, **dadurch gekennzeichnet, dass** die Nahfeld-Sensoranordnung (78) jeweils an den freifahrenden Transportwagen (38) angeordnet ist.

7. Behandlungsanlage nach Anspruch 5 oder 6, **dadurch gekennzeichnet, dass** die Spursteuereinheit (86) am oder im freifahrenden Transportwagen (38) angeordnet ist.

8. Behandlungsanlage nach einem der Ansprüche 5 bis 7, **dadurch gekennzeichnet, dass** die Nahfeld-Sensoranordnung (78) umfasst:
a) zumindest eine Kamera (80) oder einen optischen Scanner (94), insbesondere einen Laserscanner, und/oder zumindest einen Ultraschall-Sensor und/oder zumindest einen Radar-Sensor, die bzw. der am freifahrenden Transportwagen (38) angeordnet ist und mittels eines Kamerabildes und/oder optisch scanbarer Strukturen (98) und/oder reflektierender Strukturen Lage-Rohinformationen ermitteln kann, die von der Spursteuereinheit (86) zu Lageinformationen prozessierbar sind; und/oder
b) zumindest einen Kraftsensor (92), der an der Verbindungseinrichtung (50) oder an einem Fahrwerkgehäuse (46) angeordnet und dazu eingerichtet ist, mittelbar oder unmittelbar ein Anstoßen der Verbindungseinrichtung (50) an einem Hindernis zu detektieren, und/oder
c) zumindest einen Drehwertgeber, der dazu eingerichtet ist, eine Drehstellung zumindest einer Radanordnung (74; 74a, 74b) anzugeben.

9. Behandlungsanlage nach einem der Ansprüche 5 bis 8, **dadurch gekennzeichnet, dass** das Fahrwerk (44) jedes freifahrenden Transportwagens (38) ein oder mehrere aktiv drehbare Radanordnungen (74a) aufweist, die
a) jeweils um eine Drehachse (A_{D}) aktiv drehbar sind, die zu einer Radaufhängungsachse (A_{R}) senkrecht, insbesondere vertikal, verläuft; und
b) über einen Drehantrieb (88) mit der Spursteuereinheit (86) koppelbar sind, derart, dass die Spursteuereinheit (86) in Abhängigkeit von den von der Nahfeld-Sensoranordnung (78) ermittelbaren Lage-Rohinformationen einen oder mehrere Drehantriebe (88) aktiviert, derart, dass der jeweilig aktivierte Drehantrieb (88) eine Drehung der entsprechenden Radanordnung (74a) um die Drehachse (A_{D}) bewirkt.

10. Behandlungsanlage nach Anspruch 9, **dadurch gekennzeichnet, dass** eine, mehrere oder alle aktiv drehbaren Radanordnungen (74a) mittels der Spursteuereinheit (86) individuell drehbar sind.

11. Behandlungsanlage nach einem der vorhergehenden Ansprüche, **dadurch gekennzeichnet, dass** die Spurunterstützungseinrichtung (68) zum passiven Abstimmen der Hauptausrichtung (A_{H}) und der Förderrichtung (R_{F}) aufeinander entlang der Förderstrecke (S_{F}) eine oder mehrere Führungsstrukturen (66; 70; 72: 72a, 72b) aufweist, die auf die freifahrenden Transportwagen (38) jeweils einen Führungswiderstand ausüben können.

12. Behandlungsanlage nach Anspruch 11, **dadurch gekennzeichnet, dass** eine oder mehrere Führungsstrukturen (66; 70; 72: 72a, 72b) durch
a) eine oder mehrere Fahrwerk-Führungsstrukturen (72) ausgebildet sind, die innerhalb des Fahrraumes (42), insbesondere auf einem Fahrboden (40) innerhalb des Fahrraumes (42), angeordnet sind, und die den Führungswiderstand auf das Fahrwerk (44) ausüben können, wobei die Drehachse (A_{D}) zu einer Radaufhängungsachse (A_{R}) senkrecht, insbesondere vertikal, verläuft; und/oder
b) eine Fahrraumbegrenzung (66) ausgebildet sind, die den Führungswiderstand auf ein Fahrwerkgehäuse (46) des Fahrwerks (44) ausüben kann.

13. Behandlungsanlage nach Anspruch 11 oder 12, **dadurch gekennzeichnet, dass** an der Verbindungseinrichtung (50) ein Kontaktelement (90), insbesondere ein Roll- oder Gleitelement, angeordnet ist, welches an zumindest einer Kante (64a) und/oder einer Innenfläche (64b) des Verbindungsdurchgangs (51) entlangrollen bzw. entlanggleiten kann.

14. Behandlungsanlage nach einem der vorhergehenden Ansprüche, **dadurch gekennzeichnet, dass** aktive und passive Anteile der Abstimmung der Hauptausrichtung (A_{H}) des Transportwagens (38) und der Förderrichtung (R_{F}) aufeinander überlagerbar sind.

## Claims

1. A treatment system for treating workpieces (12), in particular for treating vehicle bodies (14), having
a) a conveying system (32), which comprises a plurality of free-moving transport carriages (38) with which at least one workpiece (12) in each case can be conveyed along a conveying route (S_{F}) in variable conveying directions (R_{F});
wherein
b) each free-moving transport carriage (38) comprises in each case:
ba) a chassis (44), which defines a main axis and main alignment (A_{H}) of the free-moving transport carriage (38), a fastening device (48) for at least one workpiece (12) and a connecting device (50), which couples the chassis (44) to the fastening device (48); and
bb) a control device (62), which is designed to control the chassis (44) along the conveying route (S_{F}) depending on position information which is provided by at least one position information transmitter (52);
c) a movement space (42) is present along the conveying route (S_{F}), which movement space is connected to a workpiece conveying space (34) via a connecting passage (51), wherein the chassis (44) can be moved in the movement space (42) so that the fastening device (48) is also moved in the workpiece conveying space (34) and the connecting device (50) extends through the connecting passage (51),
**characterized in that**
d) in addition to the control device (62) of the free-moving transport carriage (38), a mechanical and/or sensor-dependent track assistance device (68) is provided, which is designed to actively and/or passively adapt the main alignment (A_{H}) of the free-moving transport carriage (38) and the conveying direction (R_{F}) to one another on the basis of at least one parameter which is dependent on the connecting passage (51).

2. The treatment system as claimed in claim 1, **characterized in that** the parameter which is dependent on the connecting passage (51) is at least indirectly
a) the course of an edge (64a) and/or an inside surface (64b) of the connecting passage (51) in the conveying direction (R_{F}); and/or
b) the inclination of the inside surface (64b) of the connecting passage (51) with respect to a vertical plane extending in the conveying direction (R_{F}); and/or
c) the local width of the connecting passage (51).

3. The treatment system as claimed in one of the preceding claims, **characterized in that** the main alignment (A_{H}) of the free-moving transport carriages (38) and the conveying direction (R_{F}) are adapted to one another by the track assistance device (68) in such a way that
a) after or during an adaptation of the free-moving transport carriage (38), the main alignment (A_{H}) always extends or is kept parallel or perpendicular to the conveying direction (R_{F}); and/or
b) after or during the adaptation, at least a section of the connecting device, which extends through the connecting passage (51), is, or is kept, at a predetermined tolerance distance (d_{A}) from at least an edge (64a) and/or an inside surface (64b) of the connecting passage (51).

4. The treatment system as claimed in claim 3, **characterized in that** the tolerance distance (d_{A}) is at least 3 to 7 mm, preferably at least 6 to 9 mm and particularly preferably at least 8 to 14 mm.

5. The treatment system as claimed in one of the preceding claims, **characterized in that**
a) for the active adaptation of the main alignment (A_{H}) and the conveying direction (R_{F}) to one another, the track assistance device (68) has at least one near-field sensor arrangement (78), which is coupled to a track control unit (86),
wherein
b) via position raw information which can be determined by the near-field sensor arrangement (78), the track control unit (86) can at least indirectly determine a relative position of one or more points of the free-moving transport carriages (38) in each case with regard to one or more parameters which are dependent on the connecting passage (51).

6. The treatment system as claims in claim 5, **characterized in that** the near-field sensor arrangement is arranged on the free-moving transport carriage (38).

7. The treatment system as claimed in one of claims 5 or 6, **characterized in that** the track control unit is arranged on or in the free-moving transport carriage (38)..

8. The treatment system as claimed in one of claims 5 to 7, **characterized in that** the near-field sensor arrangement (78) comprises:
a) at least one camera (80) or an optical scanner (94), in particular a laser scanner, and/or at least one ultrasound sensor and/or at least one radar sensor, which is arranged on the free-moving transport carriage (38) and, by means of a camera image and/or optically scannable structures (98) and/or reflective structures, can determine position raw information which can be processed into position information by the track control unit (86); and/or
b) at least one force sensor (92), which is arranged on the connecting device (50) or on a chassis housing (46) and is designed to indirectly or directly detect if the connecting device (50) strikes an obstacle, and/or
c) at least one rotary encoder, which is designed to indicate a rotary position of at least one wheel arrangement (74; 74a, 74b).

9. The treatment system as claimed in one of claims 5 to 8, **characterized in that** the chassis (44) has one or more actively rotatable wheel arrangements (74a), which
a) are each actively rotatable about an axis of rotation (A_{D}), which extends perpendicularly, in particularly vertically, to a wheel suspension axis (A_{R}); and
b) can be coupled to the track control unit (86) via a rotary drive (88) in such a way that the track control unit (86), depending on the position raw information which can be determined by the near-field sensor arrangement (78), activates one or more rotary drives (88) in such a way that the respectively activated rotary drive (88) induces a rotation of the corresponding wheel arrangement (74a) about the axis of rotation (A_{D}).

10. The treatment system as claimed in claim 9, **characterized in that** one, more or all actively rotatable wheel arrangements (74a) can be rotated individually by means of the track control unit (86) .

11. The treatment system according to one of the preceding claims, **characterized in that**, for passive adaptation of the main alignment (A_{H}) and the conveying direction (R_{F}) to one another along the conveying route (S_{F}), the track assistance device (68) has one or more guide structures (66; 70; 72: 72a, 72b), which can exert a guiding resistance in each case on the free-moving transport carriages (38) .

12. The treatment system as claimed in claim 11, **characterized in that** one or more guide structures (66; 70; 72: 72a, 72b) are formed by
a) one or more chassis guide structures (72), which are arranged within the movement space (42), in particular on a floor (40) within the movement space (42), and which can exert the guiding resistance on the chassis (44), wherein the axis of rotation (A_{D}) extends perpendicularly, in particular vertically, to a wheel suspension axis (A_{R}); and/or
b) a delimitation (66) of the movement space, which can exert the guiding resistance on a chassis housing (46) of the chassis (44).

13. The treatment system as claimed in claim 11 or 12, **characterized in that** a contact element (90), in particular a rolling or sliding element, is arranged on the connecting device (50), which can roll or slide along at least an edge (64a) and/or an inside surface (64b) of the connecting passage (51).

14. The treatment system according to one of the preceding claims, **characterized in that** active and passive components of the adaptation of the main alignment (A_{H}) of the transport carriage (38) and the conveying direction (R_{F}) to one another can be superimposed.

## Revendications

1. Installation de traitement pour le traitement de pièces (12), en particulier pour le traitement de carrosseries de véhicule (14), comportant
a) un système de convoyage (32) qui comprend plusieurs chariots de transport (38) circulant librement, à l'aide desquels respectivement au moins une pièce (12) peut être convoyée dans des directions de convoyage (R_{F}) variables le long d'une voie de convoyage (S_{F}) ;
dans laquelle
b) chaque chariot de transport (38) circulant librement comprend respectivement :
ba) un train roulant (44) qui définit un axe principal et une orientation principale (A_{H}) du chariot de transport (38) circulant librement, un dispositif de fixation (48) pour au moins une pièce (12) et un dispositif de liaison (50) qui accouple le train roulant (44) au dispositif de fixation (48) ; et
bb) un dispositif de commande (62) qui est conçu pour, en fonction d'informations de position qui sont fournies par au moins un transmetteur d'informations de position (52), commander le train roulant (44) le long de la voie de convoyage (S_{F}) ;
c) le long de la voie de convoyage (S_{F}), un espace de circulation (42) est présent, lequel est relié à un espace de convoyage de pièces (34) par le biais d'un passage de liaison (51), le train roulant (44) étant déplaçable dans l'espace de circulation (42), de telle sorte que le dispositif de fixation (48) soit guidé conjointement dans l'espace de convoyage de pièces (34) et que le dispositif de liaison (50) s'étende à travers le passage de liaison (51),
**caractérisée en ce que**
d) en plus du dispositif de commande (62) du chariot de transport (38) circulant librement, un dispositif d'assistance de piste (68) mécanique et/ou dépendant d'un capteur est prévu, lequel dispositif d'assistance est conçu pour adapter activement et/ou passivement l'une à l'autre l'orientation principale (A_{H}) du chariot de transport (38) circulant librement et la direction de convoyage (R_{F}) sur la base d'au moins un paramètre dépendant du passage de liaison (51).

2. Installation de traitement selon la revendication 2, **caractérisée en ce que** le paramètre dépendant du passage de liaison (51) est au moins indirectement
a) l'allure d'une arête (64a) et/ou d'une surface intérieure (64b) du passage de liaison (51) dans la direction de convoyage (R_{F}) ; et/ou
b) l'inclinaison de la surface intérieure (64b) du passage de liaison (51) par rapport à un plan vertical s'étendant dans la direction de convoyage (R_{F}) ; et/ou
c) la largeur locale du passage de liaison (51).

3. Installation de traitement selon l'une des revendications précédentes, **caractérisée en ce que** l'orientation principale (A_{H}) du chariot de transport (38) circulant librement et la direction de convoyage (R_{F}) sont adaptées l'une à l'autre au moyen du dispositif d'assistance de piste (68) de telle sorte que
a) l'orientation principale (A_{H}), après ou pendant une adaptation du chariot de transport (38) circulant librement, s'étend ou est maintenue continuellement de manière parallèle ou perpendiculaire à la direction de convoyage (R_{F}) ; et/ou
b) au moins une partie du dispositif de liaison qui s'étend à travers le passage de liaison (51), après ou pendant l'adaptation, est ou est maintenue à une distance de tolérance prédéfinie (d_{A}) d'au moins une arête (64a) et/ou d'une surface intérieure (64b) du passage de liaison (51).

4. Installation de traitement selon la revendication 3, **caractérisée en ce que** la distance de tolérance (d_{A}) vaut au moins 3 à 7 mm, de préférence au moins 6 à 9 mm et de manière particulièrement préférée au moins 8 à 14 mm.

5. Installation de traitement selon l'une des revendications précédentes, **caractérisée en ce que**
a) le dispositif d'assistance de piste (68), pour l'adaptation active de l'orientation principale (A_{H}) et de la direction de convoyage (R_{F}) l'une à l'autre, présente au moins un agencement de détection de champ proche (78) qui est couplé à une unité de commande de piste (86),
b) l'unité de commande de piste (86), par le biais d'informations brutes de position pouvant être déterminées par l'agencement de détection de champ proche (78), pouvant déterminer respectivement au moins indirectement une position relative d'un ou plusieurs points du chariot de transport (38) circulant librement par rapport à un ou plusieurs paramètres dépendant du passage de liaison (51).

6. Installation de traitement selon la revendication 5, **caractérisée en ce que** l'agencement de détection de champ proche (78) est disposé respectivement sur le chariot de transport (38) circulant librement.

7. Installation de traitement selon la revendication 5 ou 6, **caractérisée en ce que** l'unité de commande de piste (86) est disposée sur ou dans le chariot de transport (38) circulant librement.

8. Installation de traitement selon l'une des revendications 5 à 7, **caractérisée en ce que** l'agencement de détection de champ proche (78) comprend :
a) au moins une caméra (80) ou un scanner optique (94), en particulier un scanner laser, et/ou au moins un capteur à ultrasons et/ou au moins un capteur radar, qui est disposé sur le chariot de transport (38) circulant librement et peut déterminer des informations brutes de position au moyen d'une image de caméra et/ou de structures (98) pouvant être scannées optiquement et/ou de structures réfléchissantes, lesquelles informations peuvent être traitées par l'unité de commande de piste (86) pour obtenir des informations de position ; et/ou
b) au moins un capteur de force (92) qui est disposé sur le dispositif de liaison (50) ou sur un carter de train roulant (46) et est conçu pour détecter directement ou indirectement un impact du dispositif de liaison (50) contre un obstacle, et/ou
c) au moins un transmetteur de valeurs de rotation qui est conçu pour indiquer une position en rotation d'au moins un ensemble de roues (74 ; 74a, 74b).

9. Installation de traitement selon l'une des revendications 5 à 8, **caractérisée en ce que** le train roulant (44) de chaque chariot de transport (38) circulant librement présente un ou plusieurs ensembles de roues (74a) pouvant tourner activement, lesquels
a) peuvent tourner activement respectivement autour d'un axe de rotation (A_{D}) qui s'étend perpendiculairement, en particulier verticalement, par rapport à un axe de suspension de roue (A_{R}) ; et
b) peuvent être accouplés à l'unité de commande de piste (86) par le biais d'un entraînement rotatif (88), de telle sorte que l'unité de commande de piste (86), en fonction des informations brutes de position pouvant être déterminées par l'agencement de détection de champ proche (78), active un ou plusieurs entraînements rotatifs (88) de telle sorte que l'entraînement rotatif (88) activé respectivement provoque une rotation de l'ensemble de roues (74a) correspondant autour de l'axe de rotation (A_{D}).

10. Installation de traitement selon la revendication 9, **caractérisée en ce qu'**un, plusieurs ou tous les ensembles de roues (74a) pouvant tourner activement peuvent tourner individuellement au moyen de l'unité de commande de piste (86).

11. Installation de traitement selon l'une des revendications précédentes, **caractérisée en ce que** le dispositif d'assistance de piste (68), pour l'adaptation passive de l'orientation principale (A_{H}) et de la direction de convoyage (R_{F}) l'une à l'autre, présente une ou plusieurs structures de guidage (66 ; 70 ; 72 : 72a, 72b) le long de la voie de convoyage (S_{F}), lesquelles peuvent exercer respectivement une résistance de guidage sur les chariots de transport (38) circulant librement.

12. Installation de traitement selon la revendication 11, **caractérisée en ce qu'**une ou plusieurs structures de guidage (66 ; 70 ; 72 : 72a, 72b)
a) sont formées par une ou plusieurs structures de guidage de train roulant (72) qui sont disposées à l'intérieur de l'espace de circulation (42), en particulier sur un plancher de circulation (40) à l'intérieur de l'espace de circulation (42), et qui peuvent exercer la résistance de guidage sur le train roulant (44), l'axe de rotation (A_{D}) s'étendant perpendiculairement, en particulier verticalement, par rapport à un axe de suspension de roue (A_{R}) ; et/ou
b) sont formées par une limitation d'espace de circulation (66) qui peut exercer la résistance de guidage sur un carter de train roulant (46) du train roulant (44).

13. Installation de traitement selon la revendication 11 ou 12, **caractérisée en ce qu'**un élément de contact (90), en particulier un élément de roulement ou de glissement, est disposé sur le dispositif de liaison (50), lequel élément de contact peut rouler ou glisser sur au moins une arête (64a) et/ou une surface intérieure (64b) du passage de liaison (51) le long de celles-ci.

14. Installation de traitement selon l'une des revendications précédentes, **caractérisée en ce que** des composantes actives et passives de l'adaptation de l'orientation principale (A_{H}) du chariot de transport (38) et de la direction de convoyage (R_{F}) l'une à l'autre peuvent être superposées.
